(19) Europäisches Patentamt
European Patent Office
Office européen des brevets

(11) **EP 3 548 263 B1**

(12) **EUROPÄISCHE PATENTSCHRIFT**

(45) Veröffentlichungstag und Bekanntmachung des Hinweises auf die Patenterteilung:
**14.06.2023   Patentblatt 2023/24**

(21) Anmeldenummer: **17818065.9**

(22) Anmeldetag: **30.11.2017**

(51) Internationale Patentklassifikation (IPC):
*C03C 17/00* (2006.01)    *C03C 17/32* (2006.01)
*B29L 31/30* (2006.01)    *B29C 73/02* (2006.01)
*B32B 17/10* (2006.01)

(52) Gemeinsame Patentklassifikation (CPC):
**C03C 17/002; B29C 73/025; B32B 17/10036;
B32B 17/10963; C03C 17/32; B29L 2031/3052**

(86) Internationale Anmeldenummer:
**PCT/EP2017/081055**

(87) Internationale Veröffentlichungsnummer:
**WO 2018/100100 (07.06.2018 Gazette 2018/23)**

(54) **VORRICHTUNG UND VERFAHREN ZUR REPARATUR VON SCHADSTELLEN**

APPARATUS AND PROCESS FOR REPAIRING DAMAGED AREAS

DISPOSITIF ET PROCEDE DE RÉPARATION DE SITES ENDOMMAGÉS

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **02.12.2016   DE 102016224075**

(43) Veröffentlichungstag der Anmeldung:
**09.10.2019   Patentblatt 2019/41**

(73) Patentinhaber: **Brach, Harald**
**87499 Wildpoldsried (DE)**

(72) Erfinder: **Brach, Harald**
**87499 Wildpoldsried (DE)**

(74) Vertreter: **MERH-IP Matias Erny Reichl Hoffmann
Patentanwälte PartG mbB
Paul-Heyse-Strasse 29
80336 München (DE)**

(56) Entgegenhaltungen:
**DE-T2- 60 008 282     DE-T2- 69 715 434
GB-A- 2 518 407     US-A- 4 032 272
US-A- 4 569 808     US-A- 4 820 148
US-A- 5 156 853     US-A- 5 591 460
US-A1- 2015 239 185**

## Beschreibung

Die vorliegende Erfindung betrifft eine Vorrichtung und ein Verfahren zur Reparatur von Schadstellen in Festkörperoberflächen und insbesondere in Glasscheiben (Windschutzscheiben von Kraftfahrzeugen), um ein Reparaturmittel mit geringem Arbeitsaufwand in eine Schadstelle zu verbringen und eine Schadstellenreparatur zeiteffizient und mit hoher Präzision durchzuführen.

## Hintergrund der Erfindung

Im Stand der Technik sind Vorrichtungen und Verfahren zur Reparatur von beschädigtem Fahrzeugglas bekannt, bei denen mittels Aufsetzens eines Gehäuses auf eine Schadstelle ein Reparaturraum definiert wird, in welchem mittels eines mechanisch/manuell betriebenen Kolbens ein Unterdruck bzw. Überdruck anwendbar ist. Ein Reparaturmittel wird dann mittels manueller Überdruckerzeugung auf die Schadstelle verbracht. Eine solche Konfiguration weist insbesondere die Nachteile auf, dass die angewandten Drücke nicht präzise einstellbar sind und das zudem eine Position des Gehäuses in Relation zur Schadstelle aufgrund der manuellen Betätigung des Kolbens leicht veränderbar bzw. verschiebbar ist. Ein Verschieben des Gehäuses während des Reparaturvorgangs kann eine ungleichmäßige Verteilung des Reparaturmittels zur Folge haben und somit eine Verunreinigung von nicht beschädigten Teilen oder Flächen der Glasscheibe zur Folge haben.

Die DE-T-60008282 betrifft eine Vorrichtung und ein Verfahren zum Reparieren eines Fahrzeugglases, wobei zunächst ein Vakuum an einem Reparaturraum und ein flüssiges Reparaturmaterial angelegt wird, während das flüssige Reparaturmaterial außerhalb des Reparaturraums gehalten wird. Dann wird das flüssige Reparaturmaterial in den Reparaturraum eingebracht und nachfolgend wird der Reparaturraum unter Druck gesetzt.

Die US-A-4032272 betrifft eine weitere Reparaturvorrichtung für Glasscheiben, wobei ebenfalls der vorgenannte Reparaturablauf zur Reparatur gezeigt ist.

Die US-A-2015239185 betrifft eine weitere Scheibenreparaturvorrichtung bei der ein flüssiges Reparaturmaterial in den Reparaturraum eingebracht und nachfolgend unter Druck gesetzt wird.

## Zusammenfassung der Erfindung

Folglich besteht Bedarf für eine Glasreparaturvorrichtung bzw. ein Verfahren zur Glasreparatur, wodurch ermöglicht wird eine Reparatur einer Glasscheibe vereinfacht durchzuführen. Insbesondere besteht der Bedarf, ein Reparaturmittel in eine von Verunreinigungen gesäuberte Schadstelle mit hoher Präzision einzubringen bzw. einzuleiten, sowie die für eine qualitativ hochwertige Reparatur notwendigen Atmosphärenparameter (Druckwerte) in der Umgebung der Schadstelle in Abstimmung mit den einzelnen Phasen einer Reparatur exakt einzustellen und zu gewährleisten.

Diese Aufgabe wird von der Erfindung gemäß den unabhängigen Patentansprüchen gelöst. Weitere bevorzugte Weiterentwicklungen der Erfindung sind in den abhängigen Patentansprüchen beschrieben.

Ein Aspekt der Erfindung betrifft eine Vorrichtung zum Reparieren einer Schadstelle einer Glasscheibe, die einen Bearbeitungskopf aufweisen kann. Der Bearbeitungskopf kann so konfiguriert sein, dass er an der Glasscheibe angeordnet werden kann. Zudem kann der Bearbeitungskopf einen Fixierabschnitt aufweisen. Dieser Fixierabschnitt kann so konfiguriert sein, dass der Bearbeitungskopf an der Glasscheibe fixiert werden kann. Weiterhin kann der Bearbeitungskopf der erfindungsgemäßen Vorrichtung einen Reparaturabschnitt aufweisen. Der Reparaturabschnitt kann konfiguriert sein, die Schadstelle mit einem Reparaturmittel zu füllen. Zudem kann der Bearbeitungskopf eine erste Passage mit einer Öffnung aufweisen, die in dem Fixierabschnitt münden kann. Die Passage kann ferner konfiguriert sein, dass die Passage mit einem ersten Druck beaufschlagt werden kann. Zudem kann mittels der Öffnung der erste Druck zwischen der Glasscheibe und dem Fixierabschnitt beaufschlagbar sein. Weiterhin kann der Bearbeitungskopf der erfindungsgemäßen Vorrichtung eine zweite Passage mit einer Öffnung aufweisen. Die Öffnung kann in einem Reparaturabschnitt münden. Zudem kann die zweite Passage konfiguriert sein, dass die Passage für eine vorbestimmte Dauer mit einem zumindest teilweise alternierenden Druckverlauf beaufschlagt werden kann. Insbesondere kann mittels der Öffnung zwischen der Schadstelle und dem Reparaturabschnitt der zumindest teilweise alternierende Druckverlauf beaufschlagbar sein. Ferner kann der Bearbeitungskopf konfiguriert sein, dass in die zweite Passage ein flüssiges Reparaturmittel eingeleitet werden kann. Der Bearbeitungskopf kann ferner so konfiguriert sein, dass ein eingeleitetes flüssiges Reparaturmittel auf die Schadstelle der Glasscheibe verbracht werden kann und die Schadstelle füllen kann, wenn die zweite Passage für die vorbestimmte Dauer mit dem zumindest teilweise alternierenden Druckverlauf beaufschlagt wird.

Durch die erfindungsgemäße Ausgestaltung der Vorrichtung zum Reparieren einer Schadstelle einer Glasscheibe wird ermöglicht eine Reparatur einer beschädigten Glasscheibe vereinfacht durchzuführen. Insbesondere wird eine rutschfeste bzw. fixierende Verbindung zwischen dem Bearbeitungskopf und der Glasscheibe sichergestellt, wodurch unter anderem eine präzise Einleitung bzw. Verbringung eines Reparaturmittels auf die Schadstelle der Glasscheibe vorgenommen werden kann. Mit anderen Worten wird durch das Zusammenspiel der Druckbeaufschlagungen gewährleistet, dass einerseits der Bearbeitungskopf während der gesamten Reparatur fest an der Glasscheibe bzw. über der Schadstelle fixiert wird und andererseits die Schadstelle gründlich von Verunreinigungen gereinigt wird, wobei das Reparaturmittel mit hoher Präzision in alle beschädigten Bereiche der Schadstelle der Glasscheibe eingebracht werden kann. Zudem wird verhindert, dass das Reparaturmittel auf andere Bereiche als die Schadstelle aufgetragen bzw. verbracht wird. Die erfindungsgemäße Vorrichtung verhindert demzufolge ein Verschmieren bzw. Verteilen des Reparaturmittels auf unbeschädigten Bereiche der Glasscheibe bzw. der Festkörperoberfläche.

Vorzugsweise ist die erfindungsgemäße Vorrichtung zum Reparieren einer Schadstelle einer Glasscheibe so ausgebildet, dass die vorbestimmte Dauer ein erstes Zeitintervall umfassen kann. Ferner kann die vorbestimmte Dauer ein auf das erste Zeitintervall nachfolgendes zweites Zeitintervall umfassen. Weiterhin kann die vorbestimmte Dauer ein auf das zweite Zeitintervall nachfolgendes drittes Zeitintervall umfassen. Die Vorrichtung zum Reparieren einer Schadstelle einer Glasscheibe kann ferner konfiguriert sein, so dass während des ersten Zeitintervalls die zweite Passage mit dem ersten Druck beaufschlagt wird, wobei während des zweiten Zeitintervalls die zweite Passage mit einem zweiten Druck beaufschlagt wird und wobei während des dritten Zeitintervalls die zweite Passage mit einem dritten Druck beaufschlagt wird. Ferner kann die Vorrichtung zum Reparieren einer Schadstelle einer Glasscheibe konfiguriert sein, so dass nach Ablauf des dritten Zeitintervalls die zweite Passage periodisch wechselnd jeweils mit dem ersten Druck, dem zweiten Druck und dem dritten Druck bis zum Ende der vorbestimmten Dauer beaufschlagt wird.

Diese Ausführungsform hat den Vorteil, dass gemäß eines vorbestimmten Zeitverlaufs die zweite Passage mit exakt vorgegebenen Druckwerten beaufschlagt werden kann, während der Bearbeitungskopf mittels einer Druckbeaufschlagungen an der ersten Passage an der Glasscheibe sicher fixiert werden kann. Somit wird es ermöglicht die Schadstelle gründlich von Verunreinigungen bzw. Verschmutzungen zu säubern und das Reparaturmittel exakt in die Schadstelle der Glasscheibe, insbesondere in mikroskopische Bruchstellen bzw. Risse, einzubringen. Ein Reparaturprozess kann somit einfacher, schneller und mit erhöhtem Gütegrad, d.h. höherer Qualität, durchgeführt werden.

Vorzugsweise ist die erfindungsgemäße Vorrichtung zum Reparieren einer Schadstelle einer Glasscheibe so ausgebildet, dass der Fixierabschnitt ein erstes Dichtelement aufweisen kann, wobei mittels des ersten Dichtelements der Fixierabschnitt von dem Reparaturabschnitt separiert werden kann. Zudem kann das erste Dichtelement ferner eingerichtet sein, um sich beim Anordnen an der Glasscheibe einer Krümmung der Glasscheibe anzupassen.

Diese Ausführungsform hat den Vorteil, dass der Bearbeitungskopf der erfindungsgemäßen Vorrichtung bei Glasscheiben mit unterschiedlichen Krümmungsgraden bzw. Wölbungsgraden einsetzbar ist. Mit anderen Worten wird eine Anwendung bei einer Vielzahl von Glasscheiben verschiedener Hersteller und Modelle ermöglicht. Die universelle Einsetzbarkeit der vorliegenden Ausführungsform vereinfacht somit den Reparaturprozess erheblich und reduziert den Material bzw. Kostenaufwand.

Zudem wird ein beaufschlagter Druck zwischen der Glasscheibe und dem Reparaturabschnitt zuverlässig aufrechterhalten. Plötzlich auftretende Druckgradienten bzw. Druckschwankungen können somit aufgrund des Dichtelements gut kompensiert werden. Mit anderen Worten wird der Druckwert zwischen Reparaturabschnitt und Glasscheibe mit hoher Präzision auf vorbestimmte Werte eingestellt und kann zuverlässig auf einem eingestellten Wert gehalten werden, wodurch eine Säuberung der Schadstelle bzw. ein Einbringen des Reparaturmittels in oder auf die Schadstelle optimiert wird. Infolgedessen kann der Gütegrad der Reparatur der Schadstelle verbessert werden.

Vorzugsweise ist die erfindungsgemäße Vorrichtung zum Reparieren einer Schadstelle einer Glasscheibe so ausgebildet, dass das erste Dichtelement ein Ring sein kann, der aus einem flexiblen Material ist, bzw. ein flexibles Material umfasst.

Diese Ausführungsform hat den Vorteil, dass sich das Dichtelement leicht an eine beliebige geometrische Form des Bearbeitungskopfes anpasst. Zudem ermöglicht ein flexibles Material ein verbessertes Reaktionsverhalten des Dichtelements bei plötzlich auftretenden Druckschwankungen. Anders ausgedrückt erlaubt ein flexibles Material ein Nachgeben des Dichtelements bei Druckschwankungen ohne Verlust der Abdichtungs- bzw. Isolierungseigenschaften.

Vorzugsweise ist die erfindungsgemäße Vorrichtung zum Reparieren einer Schadstelle einer Glasscheibe so ausgebildet, dass der Fixierabschnitt ein zweites Dichtelement aufweisen kann, wobei mittels des zweiten Dichtelements der Fixierabschnitt von einem Außenbereich des Bearbeitungskopfes separiert werden kann. Zudem kann das zweite Dichtelement ferner eingerichtet sein, um sich beim Anordnen an der Glasscheibe einer Krümmung, bzw. Wölbung der Glasscheibe anzupassen.

Diese Ausführungsform hat den Vorteil, dass der Bearbeitungskopf der erfindungsgemäßen Vorrichtung bei Glasscheiben mit unterschiedlichen Krümmungsgraden bzw. Wölbungsgraden einsetzbar ist. Mit anderen Worten wird eine Anwendung bei einer Vielzahl von Glasscheiben verschiedener Hersteller und Modelle ermöglicht. Die universelle Einsetzbarkeit der vorliegenden Ausführungsform vereinfacht somit den Reparaturprozess erheblich und reduziert den Material bzw. Kostenaufwand.

Zudem wird ein beaufschlagter Druck zwischen der Glasscheibe und dem Fixierabschnitt gegenüber einer Außenatmosphäre zuverlässig aufrechterhalten. Plötzlich auftretende Druckgradienten bzw. Druckschwankungen können somit gut kompensiert werden.

Mit anderen Worten wird der Druckwert zwischen Fixierabschnitt und Glasscheibe gegenüber einer externen Atmosphäre bzw. eines externen Drucks versiegelt. Ein Verschieben oder Verrutschen des Bearbeitungskopfes an der Glasscheibe wird somit unterdrückt und infolgedessen wird die Fixierung des Bearbeitungskopfes an der Glasscheibe verbessert.

Vorzugsweise ist die erfindungsgemäße Vorrichtung zum Reparieren einer Schadstelle einer Glasscheibe so ausgebildet, dass das zweite Dichtelement ein Ring sein kann, der aus einem flexiblen Material ist, bzw. ein flexibles Material umfasst.

Diese Ausführungsform hat den Vorteil, dass sich das Dichtelement leicht an beliebige geometrische Formen des Bearbeitungskopfes anpasst. Zudem wird durch das flexible Material des Dichtelements ermöglicht, dass plötzlich auftretende Druckschwankungen aufgefangen werden können. Genauer gesagt gibt das Material des Dichtelements einem schnell veränderlichen Druckgradienten nach, ohne dass die Druckisolierung zusammenbricht bzw. verloren geht. Die Fixiereigenschaften des Bearbeitungskopfes an einer Oberfläche werden somit verbessert.

Vorzugsweise ist die erfindungsgemäße Vorrichtung zum Reparieren einer Schadstelle einer Glasscheibe so ausgebildet, dass der Bearbeitungskopf ein Drehelement mit einer Kammer aufweisen kann, die das flüssige Reparaturmittel umfassen kann. Weiterhin kann das Drehelement gegenüber dem Bearbeitungskopf drehbar angeordnet sein. Ferner kann der Bearbeitungskopf so konfiguriert sein, dass die Kammer mittels einer dritten Passage mit dem Reparaturabschnitt verbunden sein kann. Zudem kann eine Einleitung des flüssigen Reparaturmittels in den Reparaturabschnitt mittels einer Drehbewegung des Drehelements relativ zu dem Bearbeitungskopf durchgeführt werden.

Insbesondere kann das Drehelement mit der Kammer drehbar an dem Bearbeitungskopf angeordnet sein und derart konfiguriert sein, dass die Einleitung des flüssigen Reparaturmittels durch Einwirkung der Schwerkraft initiiert bzw. unterstützt wird, insofern die mit Reparaturflüssigkeit befüllte Kammer in eine Position (Durchlassposition) gedreht bzw. angeordnet wird, die es erlaubt, dass das Reparaturmittel aus der Kammer heraus und auf den Reparaturabschnitt fließt.

Hierzu kann zunächst mittels einer Einfüllöffnung der Kammer das flüssige Reparaturmittel in die Kammer verbracht werden, wobei im Anschluss an das Befüllen der Kammer ein unkontrolliertes Austreten des Reparaturmittels aus der Einfüllöffnung der Kammer durch ein Abdichten bzw. Versiegeln der Einfüllöffnung mit einem Abdichtungselement vermieden werden kann.

Die Kammer kann insbesondere derart konfiguriert sein, dass eine Einleitung des flüssigen Reparaturmittels in den Reparaturabschnitt mittels einer Drehbewegung des Drehelements und der Kammer relativ zu dem Bearbeitungskopf auf die Durchlassposition des Drehelements bzw. der Kammer erfolgen kann. Infolge der Drehbewegung des Drehelements bzw. der Kammer auf die Durchlassposition kann das flüssige Reparaturmittel unter dem Einfluss der Schwerkraft aus der Kammer herausfließen und auf den Reparaturabschnitt verbracht werden. Mittels einer Drehbewegung des Drehelements und der Kammer, die diese aus der Durchlassposition herausführt, kann die Einleitung des flüssigen Reparaturmittels auf den Reparaturabschnitt unterbrochen werden.

Mit anderen Worten kann mittels einer mechanischen Verstellung des drehbaren Drehelements und der Kammer eine Einleitung des in der Kammer befindlichen flüssigen Reparaturmittels auf den Reparaturabschnitt mittels Schwerkraft ermöglicht bzw. gesteuert werden.

Diese Ausführungsform hat den Vorteil, dass die Versorgung der Schadstelle mit dem Reparaturmittel vereinfacht wird. Insbesondere wird es ermöglicht, den Zeitpunkt der Einleitung des Reparaturmittels auf die Schadstelle genauer zu steuern. Somit wird der Reparaturprozess vereinfacht.

Vorzugsweise ist die erfindungsgemäße Vorrichtung zum Reparieren einer Schadstelle einer Glasscheibe so ausgebildet, dass das flüssige Reparaturmittel zumindest eines aus einem Acrylharz, einem Polyesterharz, einem Epoxidharz oder einem UV-härtenden Einkomponentenklebstoff umfassen kann.

Diese Ausführungsform hat den Vorteil, dass eine Reparatur zeitökonomisch, d.h. schnell, durchgeführt werden kann. Zudem wird eine einfache Nachbearbeitung, beispielsweise Schleifen und/oder Polieren, der Schadstelle ermöglicht.

Weiterhin entspricht der Transmissionskoeffizient für sichtbares Licht, das heißt elektromagnetischer Strahlung eines Frequenzbereichs von ca. 380 nm bis 780 nm, der Schadstelle nach der Reparatur dem Transmissionskoeffizienten für sichtbares Licht der unbeschädigten Glasscheibe bzw. Glasoberfläche. Mit anderen Worten kann nach der Reparatur der Schadstelle Licht durch die Schadstelle ohne störende optische Effekte hindurch propagieren.

Vorzugsweise ist die erfindungsgemäße Vorrichtung zum Reparieren einer Schadstelle einer Glasscheibe so ausgebildet, dass der erste Druck kleiner gegenüber einem atmosphärischen Druck sein kann. Zudem kann der erste Druck einen Wert zwischen $0.5*10^5$Pa und $0.95*10^5$Pa aufweisen. Mit anderen Worten kann der erste Druck einen Wert aus einem Werteintervall aufweisen, welches von $0.5*10^5$Pa und $0.95*10^5$Pa reicht.

Dies hat den Vorteil, dass der erste Druck präzise auf einen Wert eingestellt werden kann, der unterhalb des atmosphärischen Drucks liegt. Anders ausgedrückt kann somit eine Bereitstellung bzw. Beaufschlagung eines Unterdrucks an der ersten bzw. zweiten Passage sichergestellt werden. Durch die Beaufschlagung eines Unterdrucks an der ersten Passage wird ermöglicht den Bearbeitungskopf sicher an der Glasscheibe anzuordnen bzw. zu fixieren. Die Beaufschlagung eines Unterdrucks an der zweiten Passage ermöglicht eine Reinigung der Schadstelle der Glasscheibe von Verunreinigungen und eine Verhinderung der Entstehung von Lufteinschlüssen (Luftbläschen) beim Einbringen bzw. Einleiten des Reparaturmittels auf bzw. in die Schadstelle der Glasscheibe. Infolgedessen kann die Güte bzw. Qualität der Reparatur der Schadstelle erhöht werden.

Vorzugsweise ist die erfindungsgemäße Vorrichtung zum Reparieren einer Schadstelle einer Glasscheibe so ausgebildet, dass der zweite Druck ein atmosphärischer Normaldruck sein kann.

Dies hat den Vorteil, dass bei Vorliegen eines atmosphärischen Normaldrucks an der zweiten Passage das Reparaturmittel mittels Kapillarität bzw. des Kapillareffekts in Feinrisse der Schadstelle eindringen kann. Kapillarität ist das Verhalten von Flüssigkeiten, das sie bei Kontakt mit Kapillaren, z. B. engen Röhren, Spalten, Rissen oder Hohlräumen, in Feststoffen zeigen. Diese Effekte werden durch die Oberflächenspannung von Flüssigkeiten selbst und der Grenzflächenspannung zwischen Flüssigkeiten und einer festen Oberfläche hervorgerufen. Das flüssige Reparaturmittel benetzt das Material, beispielsweise eines Feinrisses, der Schadstelle und es tritt eine Kapillaraszension auf. Die Flüssigkeit (Reparaturmittel) dringt in einen Hohlraum bzw. feinen Riss der Schadstelle ein und bildet eine konkave Oberfläche. Dieses Verhalten ist auf die Adhäsionskraft zurückzuführen. Mit Adhäsions- oder Anhangskraft ist der physikalische Zustand einer Grenzflächenschicht gemeint, die sich zwischen zwei in Kontakt tretenden kondensierten Phasen ausbildet, d.h. zwischen Feststoffen (hier Glasscheibe bzw. beschädigte Bereiche der Glasscheibe) und Flüssigkeiten (hier Reparaturmittel) mit vernachlässigbarem Dampfdruck. Die Haupteigenschaft dieses Zustandes ist der durch molekulare Wechselwirkungen in der Grenzflächenschicht hervorgerufene mechanische Zusammenhalt der beteiligten Phasen. D.h. in der Grenzflächenschicht zwischen dem Reparaturmittel und dem Glasmaterial der Glasscheibe bzw. der Schadstelle der Glasscheibe wird ein mechanischer Zusammenhalt bewirkt. Somit dringt die Reparaturflüssigkeit auch in sehr feine Risse der Schadstelle vor.

Vorzugsweise ist die erfindungsgemäße Vorrichtung zum Reparieren einer Schadstelle einer Glasscheibe so ausgebildet, dass der dritte Druck größer gegenüber einem atmosphärischen Druck sein kann. Insbesondere kann der dritte Druck einen Wert zwischen 3.2 bis 4.2*10^5Pa aufweisen. Mit anderen Worten kann der dritte Druck einen Wert aus einem Werteintervall aufweisen, welches von 3.2 bis 4.2*10^5Pa reicht.

Dies hat den Vorteil, dass in Relation zu einem atmosphärischen Normaldruck (Atmosphärendruck) der dritte Druck einem Überdruck entspricht. Infolgedessen wird ermöglicht, dass das Reparaturmittel die Schadstelle bzw. die Risse der Schadstelle vollständig ausfüllt. Genauer gesagt wird durch die Beaufschlagung eines Überdrucks sichergestellt, dass verbleibende Hohlräume zwischen Reparaturmittel und Schadstelle mit Reparaturmittel gefüllt werden, indem das Reparaturmittel mittels Überdrucks in verbleibende Hohlräume und Kavitäten der Schadstelle verbracht wird. Somit wird die Güte bzw. Qualität der Reparatur erhöht.

Vorzugsweise ist die erfindungsgemäße Vorrichtung zum Reparieren einer Schadstelle einer Glasscheibe so ausgebildet, dass der erste Druck von einem ersten Pumpelement erzeugt werden kann. Ferner kann der erste Druck mittels einer ersten Druckverbindung, die zwischen dem ersten Pumpelement und der ersten Passage angeordnet sein kann, an der ersten Passage beaufschlagt werden.

Dies hat den Vorteil, dass der erste Druck mittels des ersten Pumpelements konstant und kontinuierlich erzeugt bzw. aufrechterhalten werden kann und über bzw. mittels der ersten Druckverbindung direkt an die erste Passage weitergeleitet bzw. an dieser beaufschlagt werden kann. Infolgedessen ist eine zuverlässige Beaufschlagung des ersten Drucks an der ersten Passage möglich, wodurch eine Fixierung des Bearbeitungskopfes an der Glasscheibe sichergestellt wird und somit eine Vereinfachung des Reparaturprozesses ermöglicht wird.

Vorzugsweise ist die erfindungsgemäße Vorrichtung zum Reparieren einer Schadstelle einer Glasscheibe so ausgebildet, dass die Vorrichtung eine Steuereinheit umfassen kann. Zudem kann die Steuereinheit konfiguriert sein, in Reaktion auf eine Aktivierung der Steuereinheit die erste Passage durchgehend mit dem ersten Druck zu beaufschlagen und mit dem Beginn der vorbestimmten Dauer bis zum Ende der vorbestimmten Dauer die zweite Passage mit dem ersten, zweiten und dritten Druck alternierend jeweils automatisch zu beaufschlagen.

Dies hat den Vorteil, dass der Bearbeitungskopf mittels der Druckbeaufschlagung der ersten Passage mit dem ersten Druck über den gesamten Zeitraum der Dauer der Reparatur sicher an der Glasscheibe bzw. über der Schadstelle der Glasscheibe fixiert wird. Ein Verrutschen des Arbeitskopfes während der Reparatur wird somit verhindert. Zudem ermöglicht eine automatische alternierende Beaufschlagung der zweiten Passage mit dem ersten, zweiten und dritten Druck über die vorbestimmte Dauer hinweg, dass der Reparaturprozess vereinfacht wird. Insbesondere wird durch die Automatisierung der Druckbeaufschlagung ermöglicht, dass der Reparaturprozess ohne Unterbrechung kontinuierlich durchgeführt werden kann. Somit werden Fehlerquellen ausgeschlossen, die aus einer manuellen Druckbeaufschlagung resultieren können, wie beispielsweise ein fehlerhaftes Einbringen des Reparaturmittels oder eine unerwünschte Verschiebung des Bearbeitungskopfes.

Weiterhin wird aufgrund der automatischen alternierenden Druckbeaufschlagung über eine vorbestimmte Dauer hinweg ermöglicht, dass das Reparaturmittel die Schadstelle bzw. Risse der Schadstelle vollständig ausfüllt. Insbesondere wird aufgrund des Alternierens der Druckwerte, d.h. des Wechselns zwischen ersten, zweiten und dritten Druck, ermöglicht, dass bei Anliegen eines Unterdrucks insbesondere Lufteinschlüsse aus der Schadstelle bzw. den Rissen der Schadstelle entfernt werden, bei Anliegen eines atmosphärischen Normaldrucks mittels des Kapillareffekts das Reparaturmittel in die Risse der Schadstelle eingebracht wird und bei Anliegen eines Überdrucks das Reparaturmittel weiter in die Risse der Schadstelle geschoben bzw. gedrückt wird und somit verbleibende Hohlräume in der Schadstelle bzw. den Rissen der Schadstelle ausfüllt. Durch Wechseln bzw. Alternieren zwischen den ersten, zweiten und dritten Druckwerten wird dieser Effekt optimiert. Somit wird die Güte bzw. Qualität der Schadstellenreparatur erheblich verbessert.

Vorzugsweise ist die erfindungsgemäße Vorrichtung zum Reparieren einer Schadstelle einer Glasscheibe so ausgebildet, dass der zweite und dritte Druck von einem zweiten Pumpelement erzeugt werden kann. Ferner kann eine zweite Druckverbindung mit der zweiten Passage druckschlüssig verbunden sein und ein Schaltelement aufweisen. Das Schaltelement kann mittels einer dritten Druckverbindung mit dem ersten Pumpelement verbunden sein. Ferner kann das Schaltelement mittels einer vierten Druckverbindung mit dem zweiten Pumpelement verbunden sein. Das Schaltelement kann zudem konfiguriert sein, in Reaktion auf Steuerung durch die Steuereinheit, eine druckschlüssige Verbindung zwischen dem ersten Pumpelement und der zweiten Druckverbindung oder zwischen dem zweiten Pumpelement und der zweiten Druckverbindung herzustellen. Ferner kann mittels der zweiten Druckverbindung der jeweils erste, zweite oder dritte Druck an der zweiten Passage beaufschlagt werden.

Dies hat den Vorteil, dass der zweite und dritte Druck mittels des zweiten Pumpelements konstant und kontinuierlich erzeugt bzw. aufrechterhalten werden können und über bzw. mittels der zweiten Druckverbindung und des Schaltelements direkt an die zweite Passage weitergeleitet bzw. an dieser beaufschlagt werden können. Infolgedessen ist eine zuverlässige Beaufschlagung des zweiten Drucks an der zweiten Passage möglich, wodurch die Qualität des Reparaturprozesses erhöht wird und eine Vereinfachung des Reparaturprozesses ermöglicht wird.

Vorzugsweise ist die erfindungsgemäße Vorrichtung zum Reparieren einer Schadstelle einer Glasscheibe so ausgebildet, dass die vierte Druckverbindung ein Überdruckventil umfassen kann, ferner kann das Überdruckventil eingerichtet sein, um einen konstanten maximalen dritten Druck einzustellen.

Dies hat den Vorteil, dass ein vorbestimmter maximaler dritter Druck an der zweiten Passage nicht überschritten wird. Mit anderen Worten verhindert das Überdruckventil, dass bei Erzeugung eines Drucks (Überdrucks), der über einen Schwellenwert, d.h. den maximalen dritten Druck hinausgeht, dieser Druck an die zweite Passage weitergeleitet bzw. beaufschlagt wird. Infolgedessen kann verhindert werden, dass ein zu hoher Druck zwischen der Schadstelle und dem Reparaturabschnitt aufgebaut bzw. beaufschlagt wird und zu einer Ablösung oder einem Verrutschen des Bearbeitungskopfes während des Reparaturprozesses führt. Somit wird eine zusätzliche Vereinfachung des Reparaturprozesses gewährleistet und die Sicherheit des Betriebs während der Reparatur erhöht.

Vorzugsweise ist die erfindungsgemäße Vorrichtung zum Reparieren einer Schadstelle einer Glasscheibe so ausgebildet, dass die erste Druckverbindung ein Rückschlagventil aufweisen kann. Das Rückschlagventil kann eingerichtet sein, um den ersten Druck in der ersten Druckverbindung an der ersten Passage für einen vorbestimmten Zeitabschnitt auch ohne kontinuierliche Druckbeaufschlagung durch das Pumpelement aufrechtzuerhalten.

Dies hat den Vorteil, dass auch ohne permanente bzw. kontinuierliche Versorgung bzw. Druckerzeugung des ersten Druckes durch das erste Pumpelement der erste Druck an der ersten Passage beaufschlagt bzw. gehalten wird und somit der Bearbeitungskopf an der Glasscheibe bzw. über der Schadstelle der Glasscheibe über die Dauer des Reparaturprozesses hinweg angeordnet bzw. fixiert bleibt.

Vorzugsweise ist die erfindungsgemäße Vorrichtung zum Reparieren einer Schadstelle einer Glasscheibe so ausgebildet, dass in Reaktion auf eine Steuerung durch eine Steuereinheit, ferner der zweite Druck und der dritte Druck von dem ersten Pumpelement erzeugt werden kann. Zudem kann die erste Druckpassage ein Schaltelement umfassen. Das Schaltelement kann zwischen dem ersten Pumpelement und der ersten Passage des Bearbeitungskopfes angeordnet sein. Ferner kann die erste Druckpassage ein Rückschlagventil umfassen. Das Rückschlagventil kann zwischen dem Schaltelement und der zweiten Passage angeordnet sein. Ferner kann das Rückschlagventil eingerichtet sein, um den ersten Druck in der ersten Druckverbindung und der ersten Passage für einen vorbestimmten Zeitabschnitt auch ohne kontinuierliche Druckbeaufschlagung mit dem ersten Druck durch das erste Pumpelement aufrechtzuerhalten. Die zweite Passage des Bearbeitungskopfes kann mittels einer zweiten Druckpassage druckschlüssig mit dem Schaltelement verbunden sein.

Zudem kann das Schaltelement konfiguriert sein, in Reaktion auf Steuerung durch die Steuereinheit eine druckschlüssige Verbindung zwischen dem ersten Pumpelement und der zweiten Druckverbindung herzustellen. Ferner kann die Steuereinheit konfiguriert sein, nach Herstellung der druckschlüssigen Verbindung zwischen dem ersten Pumpelement und der zweiten Druckverbindung den jeweils ersten Druck, zweiten Druck und dritten Druck mittels der zweiten Druckverbindung an der zweiten Passage zu beaufschlagen.

Dies hat den Vorteil, dass es ermöglicht wird alle Druckverlaufe, d.h. insbesondere den ersten, zweiten und dritten Druck, mit nur einem Pumpelement zu erzeugen. Somit wird der Aufbau der Vorrichtung vereinfacht und Kosten bzw. Materialaufwand verringert.

Vorzugsweise ist die erfindungsgemäße Vorrichtung zum Reparieren einer Schadstelle einer Glasscheibe so ausgebildet, dass der Bearbeitungskopf in Form einer Ellipse oder oval ausgebildet sein kann.

Dies hat insbesondere den Vorteil, dass sich der Bearbeitungskopf besser an die Krümmung der Glasscheibe anpassen kann, wodurch die Haftung bzw. Fixierung des Bearbeitungskopfes an der Glasscheibe während des Bearbeitungsprozesses weiter erhöht wird.

Ein weiterer Aspekt der Erfindung betrifft ein Verfahren zum Reparieren einer Schadstelle einer Glasscheibe. Das Verfahren zum Reparieren einer Schadstelle einer Glasscheibe kann ein Erfassen einer ersten Eingabe durch eine Steuereinheit umfassen. Ferner kann das erfindungsgemäße Verfahren ein Anordnen eines Bearbeitungskopfes an der Schadstelle der Glasscheibe umfassen. Zudem kann das erfindungsgemäße Verfahren ein Erfassen einer zweiten Eingabe durch die Steuereinheit umfassen. Ferner kann das Verfahren ein Ausführen des Schrittes eines Beaufschlagens eines ersten Drucks zwischen der Glasscheibe und einem Fixierabschnitt des Bearbeitungskopfes umfassen, wodurch der Bearbeitungskopf an der Glasscheibe fixiert wird. Weiterhin kann das Verfahren ein Ausführen des Schrittes eines Einleitens eines flüssigen Reparaturmittels in die zweite Passage und eines Verbringens des flüssigen Reparaturmittels auf die Schadstelle der Glasscheibe umfassen. Zudem kann das Verfahren ein Ausführen des Schrittes eines Beaufschlagens eines zumindest teilweise alternierenden Druckverlaufs zwischen der Schadstelle und einem Reparaturabschnitt des Bearbeitungskopfes für eine vorbestimmte Dauer umfassen.

Durch die erfindungsgemäße Ausgestaltung des Verfahrens zum Reparieren einer Schadstelle einer Glasscheibe wird ermöglicht eine Reparatur einer beschädigten Glasscheibe vereinfacht durchzuführen. Es wird ein automatisierter Ablauf des Reparaturprozesses bereitgestellt, wodurch eine Vereinfachung einer Reparatur einer Glasscheibenschadstelle einhergeht. Insbesondere wird ermöglicht, dass der Bearbeitungskopf lediglich an der Schadstelle der Glasscheibe angebracht bzw. angeordnet werden muss, so dass der Reparaturprozess von der Steuereinheit automatisch, d.h. ohne Eingriff von außen, gesteuert werden kann. Genauer gesagt wird das Fixieren des Bearbeitungskopfes an der Glasscheibe, das Verbringen des flüssigen Reparaturmittels in die Schadstelle, und das Beaufschlagen eines alternierenden, d.h. wechselnden, Druckverlaufs zwischen der Schadstelle und dem Reparaturabschnitt automatisch von der Steuereinheit gesteuert bzw. initiiert, nachdem die Steuereinheit Eingaben erhalten hat, die den Beginn des Reparaturprozesses indizieren. Infolgedessen wird es ermöglicht den Reparaturprozess autark bzw. unbeaufsichtigt von der Steuereinheit durchführen zu lassen. Somit wird durch das erfindungsgemäße Verfahren die Effizienz und Produktivität einer Glasscheibenreparatur erhöht.

Vorzugsweise ist das erfindungsgemäße Verfahren zum Reparieren einer Schadstelle einer Glasscheibe so eingerichtet, dass die vorbestimmte Dauer ein erstes Zeitintervall umfassen kann. Ferner kann die vorbestimmte Dauer ein auf das erste Zeitintervall nachfolgendes zweites Zeitintervall umfassen. Weiterhin kann die vorbestimmte Dauer ein auf das zweite Zeitintervall nachfolgendes drittes Zeitintervall umfassen. Das Beaufschlagen des zumindest teilweise alternierenden Druckverlaufs kann zudem den Schritt eines Beaufschlagens des ersten Drucks während des ersten Zeitintervalls zwischen der Schadstelle und dem Reparaturabschnitt des Bearbeitungskopfes umfassen, wodurch die Schadstelle von Verunreinigungen gesäubert werden kann. Zudem kann das Beaufschlagen des zumindest teilweise alternierenden Druckverlaufs den Schritt eines Beaufschlagens eines zweiten Drucks während des zweiten Zeitintervalls zwischen der Schadstelle und dem Reparaturabschnitt des Bearbeitungskopfes umfassen. Weiterhin kann das Beaufschlagen des zumindest teilweise alternierenden Druckverlaufs den Schritt eines Beaufschlagens eines dritten Drucks während des dritten Zeitintervalls zwischen der Schadstelle und dem Reparaturabschnitt des Bearbeitungskopfes umfassen, wodurch das flüssige Reparaturmittel die Schadstelle der Glasscheibe zuverlässig füllen kann. Ferner kann das Beaufschlagen des zumindest teilweise alternierende Druckverlaufs den Schritt eines periodisch wechselnden Beaufschlagens der zweiten Passage mit dem ersten Druck, dem zweiten Druck und dem dritten Druck bis zum Ende der vorbestimmten Dauer nach Ablauf des dritten Zeitintervalls umfassen.

Dies hat den Vorteil, dass während des Reparaturprozesses die Schadstelle der Glasscheibe mittels der zweiten Passage mit exakt vorgegebenen Druckwerten beaufschlagt werden kann, wodurch eine gründliche Reinigung der Schadstelle sowie ein präzises Einbringen des Reparaturmittels in die Schadstelle gewährleistet werden kann, während der Bearbeitungskopf aufgrund der kontinuierlichen Druckbeaufschlagung mit einem präzisen Druckwert (Unterdruck) sicher an der Glasscheibe fixiert werden kann. Dies ermöglicht einen effizienteren bzw. beschleunigten Reparaturprozess in Verbindung mit einer verbesserten Qualität des Reparaturergebnisses, d.h. der reparierten Schadstelle der Glasscheibe.

Vorzugsweise ist das erfindungsgemäße Verfahren zum Reparieren einer Schadstelle einer Glasscheibe so eingerichtet, dass es ferner den Schritt eines Entfernens des Bearbeitungskopfes von der Glasscheibe nach Ablauf der vorbestimmten Dauer umfassen kann. Zudem kann das erfindungsgemäße Verfahren den Schritt eines Bestrahlens der Schadstelle mit Licht aus einer Lichtquelle umfassen, wodurch ein Aushärten des flüssigen Reparaturmittels verursacht oder zumindest beschleunigt wird.

Dies hat den Vorteil, dass ein Nachbearbeitungsprozess (beispielsweise Säuberung der Glasscheibe) zeitnah durchgeführt werden kann. Der Reparaturprozess wird somit weiter beschleunigt bzw. effizienter gestaltet.

Vorzugsweise ist das erfindungsgemäße Verfahren zum Reparieren einer Schadstelle einer Glasscheibe so eingerichtet, dass es ferner den Schritt eines Bearbeitens der Schadstelle umfassen kann. Die Bearbeitung der Schadstelle kann zumindest ein Schleifen, Reinigen, Wachsen und Polieren umfassen.

Dies hat den Vorteil, dass die Güte bzw. Qualität der reparierten Schadstelle erhöht wird.

Zusammenfassend ermöglicht die Erfindung somit, dass eine Reparatur einer Schadstelle einer Glasscheibe oder anderer Oberflächen vereinfacht und universell durchführbar ist. Zudem wird im Vergleich zu bisherigen Systemen der Qualitätsgrad bzw. die Güte der Schadstellenreparatur erhöht.

Die Erfindung wird im Folgenden exemplarisch mit Bezug auf die beigefügten, schematischen Zeichnungen beschrieben. Es zeigen

Fig. 1 eine Perspektivdarstellung einer beispielhaften Ausbildung einer Vorrichtung zum Reparieren von Schadstellen einer Glasscheibe bzw. anderen Oberflächen, die zwei Pumpelemente umfasst,

Fig. 2 eine schematische Querschnittdarstellung eines auf einer Glasscheibe bzw. Oberfläche aufgesetzten Bearbeitungskopfes einer Vorrichtung zum Reparieren von Schadstellen,

Fig. 3 eine vergrößerte Perspektivdarstellung eines auf einer Glasscheibe angeordneten Bearbeitungskopfes,

Fig. 4 eine perspektivische Darstellung einer weiteren beispielhaften Ausbildung einer Vorrichtung zum Reparieren von Schadstellen einer Glasscheibe bzw. anderen Oberflächen, die lediglich ein Pumpelement umfasst,

Fig. 5 ein Flussdiagramm, welches die Verfahrensschritte zum Reparieren einer Schadstelle einer Glasscheibe bzw. einer anderen Oberfläche erläutert,

Fig. 6 ein Flussdiagramm, welches detailliert die Verfahrensschritte hinsichtlich der Druckbeaufschlagungen während der Reparaturdauer erläutert,

Fig. 7 A einen Bearbeitungskopf mit einem Drehelement, das das flüssige Reparaturmittel umfasst, in einer perspektivischen Ansicht von oben,

Fig. 7 B zeigt einen Bearbeitungskopf mit einem Drehelement, das das flüssige Reparaturmittel umfasst, in einer perspektivischen Ansicht von unten,

Fig. 8 einen Druckverlauf an einer Bearbeitungsstelle, und

Fig. 9 eine Druckanstiegsphase.

Im Folgenden werden verschiedene Beispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Ausführungsmerkmale begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche.

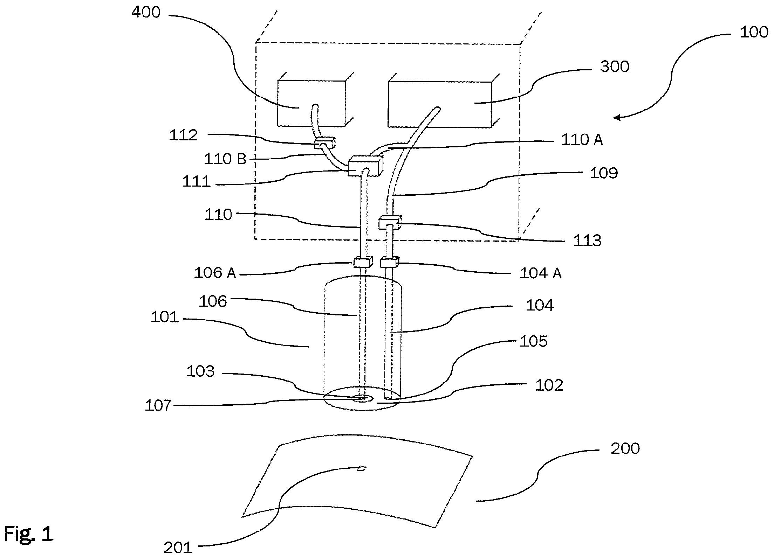

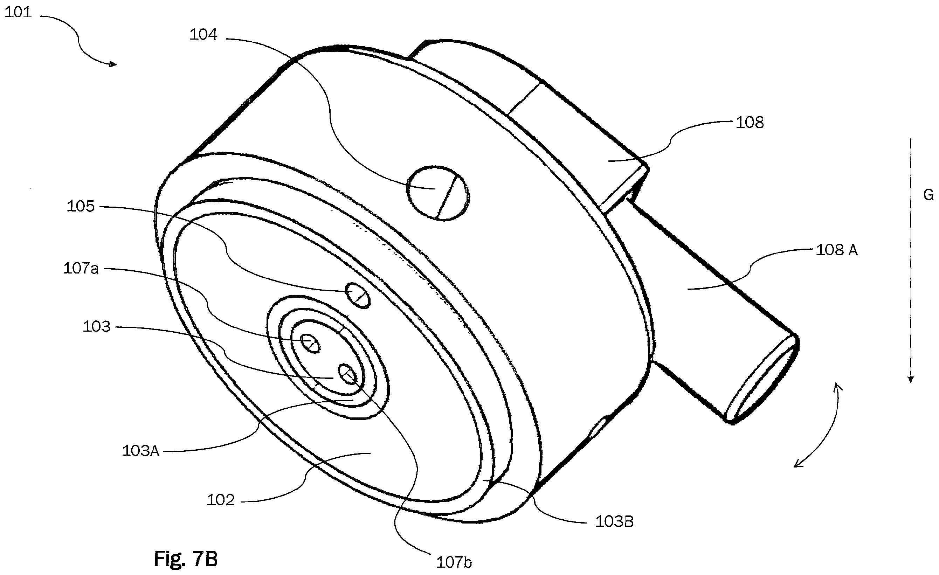

In der Figur 1 wird eine perspektivische Darstellung einer beispielhaften Ausbildung der erfindungsgemäßen Vorrichtung zur Schadstellenreparatur einer Glasscheibe dargestellt. Ein Bearbeitungskopf 101 ist konfiguriert, um auf bzw. über einer Schadstelle 201 einer Glasscheibe 200 angeordnet zu werden. Insbesondere umfasst der Bearbeitungskopf 101 einen Fixierabschnitt 102, der konfiguriert ist, um dem Bearbeitungskopf 101 an der Glasscheibe 200 bzw. über der Schadstelle 201 der Glasscheibe 200 zu fixieren. Weiterhin umfasst der Bearbeitungskopf 101 einen Reparaturabschnitt 103, der konfiguriert ist nach einer Anordnung des Bearbeitungskopfes 101 an der Glasscheibe 200 ein flüssiges Reparaturmittel in die Schadstelle 201 der Glasscheibe 200 zu verbringen bzw. einzuleiten. Reparaturabschnitt 103 sowie Fixierabschnitt 102 sind an einer Seite des Bearbeitungskopfes 101 angeordnet, die der Schadstelle 201 der Glasscheibe 200 zwecks Reparatur zugewandt wird. Zudem zeigt Figur 1, dass der Bearbeitungskopf 101 eine erste Passage 104 aufweist, die sich im Inneren des Bearbeitungskopfes 101 erstreckt und die in dem Fixierabschnitt 102 in einer ersten Öffnung 105 mündet. Weiterhin ist dargestellt, dass der Bearbeitungskopf 101 eine zweite Passage 106 aufweist, die sich räumlich separat zur ersten Passage 104 im Innern des Bearbeitungskopfes 101 erstreckt und in dem Reparaturabschnitt 103 in einer zweiten Öffnung 107 mündet. Der Reparaturabschnitt 103 ist mittels eines ersten elastischen Dichtelements 103 A von dem Fixierabschnitt 102 räumlich separat bzw. abgegrenzt (siehe auch Figur 7B). In analoger Weise weist der Fixierabschnitt 102 ein zweites elastisches Dichtelement 103 B auf (siehe auch Figur 7B), wodurch der Fixierabschnitt 102 nach außen abgegrenzt bzw. gegenüber einem Außenbereich des Bearbeitungskopfes 101 seitlich begrenzt wird. Die geometrische Form des Bearbeitungskopfes 101 in einer Schnittebene orthogonal zur Längsachse des Bearbeitungskopfes ist elliptisch. Dies hat unter anderem den Vorteil, dass einerseits die Haptik des Bearbeitungskopfes 101 verbessert wird, d.h. ein Ergreifen des Bearbeitungskopfes 101 vereinfacht wird, sowie andererseits der Bearbeitungskopf 101 sich besser an eine Krümmung der Glasscheibe 200 anpassen lässt.

Die Gesamtfläche (Oberfläche) des Fixierabschnitts 102 ist zudem größer als die Gesamtfläche des Reparaturabschnitts 103. Dies ist insbesondere von Bedeutung, wenn der Bearbeitungskopf 101 an der Glasscheibe 200 angeordnet und mittels einer Druckbeaufschlagung des Bereichs zwischen der Glasscheibe 200 und des Fixierabschnitts 102 mit einem Unterdruck an der Glasscheibe 200 fixiert wird und gleichzeitig ein Überdruck in dem Bereich zwischen Reparaturabschnitt 103 und Glasscheibe 200 bzw. Schadstelle 201 beaufschlagt wird. Ein Druck (p) gibt einen Zusammenhang zwischen einem vektoriellen Oberflächenelement $d\vec{A}$ und einer Normalkraft $d\vec{F}_n$, die auf dieses Element wirkt, an und ist damit die Proportionalitätskonstante zwischen diesen beiden Vektoren:

$$\mathrm{d}\vec{F}_n = p\,\mathrm{d}\vec{A} = p\,\vec{n}\,\mathrm{d}A$$

Hierbei zeigt der Normalenvektor auf die Fläche in dieselbe Richtung wie die Kraft. Infolgedessen ist die Gesamtkraft die integrierte Normalkraft. Die Kraft, die den Bearbeitungskopf 101 gegen die Glasscheibe 200 drückt resultiert aus dem Zusammenspiel zwischen dem den Bearbeitungskopf 101 umgebenden Atmosphärendruck und dem beaufschlagten Unterdruck zwischen Glasscheibe 200 und Fixierabschnitt 102. Anders ausgedrückt wirkt aufgrund des Unterdrucks zwischen der Glasscheibe 200 und dem Fixierabschnitt 102 eine Andruckkraft, die den Bearbeitungskopf 101 gegen die Glasscheibe 200 drückt und die aus dem den Bearbeitungskopf 101 umgebenden äußeren Atmosphärendruck resultiert. Diese Andruckkraft korrespondiert zur Fläche des Fixierabschnitts 102. Wird zwischen der Glasscheibe 200 bzw. der Schadstelle 201 und dem Reparaturabschnitt 103 ein Überdruck beaufschlagt bzw. hergestellt, resultiert dies in einer Kraft (Repulsionskraft), die zur Fläche des Reparaturabschnitts 103 korrespondiert und der Andruckkraft entgegengerichtet ist. Somit hängt der Betrag der Andruckkraft und der Repulsionskraft von der Fläche des Fixierabschnitts 102, sowie der Fläche des Reparaturabschnitts 103 ab. Infolgedessen wird die Fläche des Fixierabschnitts 102 größer gewählt als die Fläche des Reparaturabschnitts 103, um ein Ablösen des Bearbeitungskopfes von der Glasscheibe 200 zu verhindern, wenn ein Überdruck zwischen der Glasscheibe 200 und dem Reparaturabschnitt 103 beaufschlagt wird.

Zudem zeigt Figur 1, dass die erste Passage 104 mittels eines ersten Verbindungselements 104 A druckschlüssig mit einer ersten Druckverbindung 109 verbindbar ist. Das erste Verbindungselement 104 A kann beispielsweise einen Schraubverschluss oder Clipverschluss aufweisen.

in analoger Weise ist dargestellt, dass die zweite Passage 106 mittels eines zweiten Verbindungselements 106 A druckschlüssig mit einer zweiten Druckverbindung 110 verbindbar ist. Nach Herstellen der druckschlüssigen Verbindung zwischen der zweiten Passage 106 der zweiten Druckverbindung 110 mittels des zweiten Verbindungselements 106 A kann dann eine Beaufschlagung der zweiten Passage 106 mit einem Druckprofil bzw. einem Druckverlauf vorgenommen werden.

Weiterhin zeigt die Figur 1 ein Rückschlagventil 113, welches zwischen dem ersten Verbindungselement 104 A und einem ersten Pumpelement 300 an der ersten Druckverbindung 109 angeordnet ist. Dieses Rückschlagventil 113 ist konfiguriert, um einen beaufschlagten Druck an der ersten Passage 104 für eine vorbestimmte Zeitdauer, die zumindest zu der Dauer des Reparaturprozesses korrespondieren kann, aufrechtzuerhalten. Mit anderen Worten wird aufgrund des Rückschlagventils 113 ein Fixieren des Bearbeitungskopfes ermöglicht, ohne dass eine kontinuierliche Druckbeaufschlagung (Unterdruck) durch das erste Pumpelement 300 über die Dauer des Reparaturprozesses hinweg notwendig ist.

Die erste Druckverbindung 109 ist druckschlüssig mit dem ersten Pumpelement 300 verbunden. Somit kann ein von dem Pumpelement 300 generierter bzw. erzeugter Druck (Unterdruck) mittels der Druckverbindung 109 direkt an die erste Passage 104 geleitet bzw. beaufschlagt werden, wenn mittels des ersten Verbindungselements 104 A eine druckschlüssige Verbindung zwischen der ersten Passage 104 und der ersten Druckverbindung 109 hergestellt ist. Infolgedessen wird bei angeordnetem Bearbeitungskopf 101 an der Glasscheibe 200 bzw. über der Schadstelle 201, der von dem Pumpelement 300 generierte Druck zwischen der Glasscheibe 200 und dem Fixierabschnitt 102 beaufschlagt und der Bearbeitungskopf 101 aufgrund des Druckgradienten zwischen dem beaufschlagten Unterdruck und dem den Bearbeitungskopf 101 umgebenden Atmosphärendruck an der Glasscheibe 200 rutschfest fixiert.

Weiterhin zeigt Figur 1, dass zwischen dem zweiten Verbindungselement 106 A und einem zweiten Pumpelement 400 ein Schaltelement 111 an der zweiten Druckverbindung 110 angeordnet ist. Von dem Schaltelement 111 zweigt zudem eine dritte Druckverbindung 110 A ab, die druckschlüssig mit der ersten Druckverbindung 109 verbunden ist. Weiterhin zweigt von dem Schaltelement 111 eine vierte Druckverbindung 110 B ab, die druckschlüssig mit dem zweiten Pumpelement 400 verbunden ist. Zwischen dem Schaltelement 111 und dem zweiten Pumpelement 400 ist zudem ein Überdruckventil 112 an der vierten Druckverbindung 110 B angeordnet.

Eine Steuereinheit (nicht dargestellt) steuert das erste Pumpelement 300 und das zweite Pumpelement 400, um jeweils vorbestimmte Druckverläufe bzw. Druckprofile zu erzeugen. Insbesondere kann das erste Pumpelement 300 mittels der Steuereinheit konfiguriert werden einen Unterdruck zu erzeugen. Dieser Unterdruck wird mittels der ersten Druckverbindung 109 und der ersten Passage 104 zwischen der Glasscheibe 200 und dem Fixierabschnitt 102 bei auf der Glasscheibe 200 angeordnetem Bearbeitungskopf 101 beaufschlagt. Dies führt zu einer rutschfesten Befestigung des Bearbeitungskopfes 101 an der Glasscheibe 200.

Weiterhin kann die Steuereinheit das Schaltelement 111 ansteuern, um den von dem Pumpelement 300 erzeugten Unterdruck mittels der dritten Druckverbindung 110 A über die zweite Druckverbindung 110 an die zweite Passage 106 weiterzuleiten bzw. zu beaufschlagen, so dass ein Unterdruck zwischen der Schadstelle 201 und dem Reparaturabschnitt 103 beaufschlagt wird. Dies kann bspw. zu einer Säuberung der Schadstelle von Verunreinigungen, wie beispielsweise feinen Staubpartikeln führen.

Die Steuereinheit veranlasst bzw. steuert zudem, dass das zweite Pumpelement 400 einen Druckverlauf erzeugt. Insbesondere wird in Übereinstimmung mit der Erzeugung eines Unterdrucks an dem ersten Pumpelement 300 von dem zweiten Pumpelement 400 jeweils ein Normaldruck, d.h. Atmosphärendruck oder ein Überdruck erzeugt (die Definition von Überdruck und Unterdruck bezieht sich jeweils auf den normalen Atmosphärendruck). Die Erzeugung des Normaldrucks kann auch dadurch erfolgen, dass das zweite Pumpelement 400 nicht aktiviert bzw. ausgeschaltet ist und/oder über ein weiteres Ventil bspw. die zweite Druckverbindung 110 mit der Umgebung verbunden wird.

Die Steuereinheit steuert mittels des Steuerelements 111 die Beaufschlagung der zweiten Passage 106 mit einem jeweiligen Druckprofil. Insbesondere steuert die Steuereinheit, dass nach Ablauf einer vorbestimmten Zeitdauer die druckschlüssige Verbindung mit dem ersten Pumpelement 300 unterbrochen wird. D.h., es wird kein Unterdruck mehr an der zweiten Passage 106 beaufschlagt. Stattdessen wird mittels der Steuereinheit das Schaltelement 111 konfiguriert eine druckschlüssige Verbindung zwischen dem zweiten Pumpelement 400 und der zweiten Passage 106 mittels der vierten Druckverbindung 110 B herzustellen.

Das zweite Pumpelement 400 wird dann von der Steuereinheit konfiguriert einen Normaldruck zu erzeugen, der an der zweiten Passage 106 beaufschlagt wird. Wie oben schon erwähnt, kann das bspw. dadurch erfolgen, dass das zweite Pumpelement 400 ausgeschaltet ist. Es ist jedoch bspw. auch möglich die zweite Druckverbindung mit der Umgebung zu verbinden (siehe oben). Dies ermöglicht einem in die zweite Passage 106 eingeleiteten Reparaturmittel mittels des Kapillareffekts in Risse und Aushöhlungen der Schadstelle 201 einzudringen. Nach Ablauf einer vorbestimmten Zeitdauer steuert das Steuerelement das zweite Pumpelement 400 an, um einen Überdruckverlauf zu erzeugen. Dieser generierte Überdruck wird dann mittels der vierten Druckverbindung 110 B von dem Pumpelement 400 über das Schaltelement 111, die zweite Druckverbindung 110 und die zweite Passage 106 des Bearbeitungskopfes 101 zwischen der Schadstelle 201 und dem Reparaturabschnitt 103 beaufschlagt. Infolgedessen wird das Reparaturmittel in noch verbleibende Kavitäten oder Hohlräume der Schadstelle 201 gedrückt bzw. verbracht.

Dabei kommt dem Überdruckventil 112 eine Schutzfunktion zu. Für den Fall, dass das zweite Pumpelement 400 einen Druckverlauf erzeugt, der einen vorbestimmten maximalen Schwellwert überschreitet, wird durch das Überdruckventil 112 verhindert, dass dieser zu hohe Druck an die zweite Passage 106 weitergeleitet wird. Es wird somit höchstens ein vorbestimmter maximaler Druck an der zweiten Passage 106 beaufschlagt. Dies spielt unter anderem für die Befestigung des Bearbeitungskopfes 101 an der Glasscheibe 200 eine wesentliche Rolle, da eine zu hohe Überdruckbeaufschlagung zwischen der Schadstelle 201 bzw. der Glasscheibe 200 und dem Reparaturabschnitt 103 ein Ablösen des Bearbeitungskopfes 101 von der Glasscheibe 200 zur Folge haben könnte. Ein solches unbeabsichtigtes Ablösen des Bearbeitungskopfes 101 von der Glasscheibe 200 durch zu hohen Überdruck wird somit von dem Überdruckventil 112 verhindert.

Nach Ablauf einer vorbestimmten Zeitdauer wird das Schaltelement 111 von der Steuereinheit umgeschaltet, um die druckschlüssige Verbindung zwischen dem zweiten Pumpelement 400 und dem Schaltelement 111 zu unterbrechen und stattdessen wieder eine druckschlüssigen Verbindung zwischen dem ersten Pumpelement 300 und dem Schaltelement 111 mittels der dritten Druckverbindung 110 A herzustellen. Somit wird zwischen der Schadstelle 201 und dem Reparaturabschnitt 103 ein Unterdruck beaufschlagt, infolgedessen bspw. ein Luftblaseneinschluss beseitigt werden kann. Mit anderen Worten kann der beaufschlagte Unterdruck zwischen der Schadstelle 201 und dem Reparaturabschnitt 103 bewirken, dass potentiell entstandene Luftblaseneinschlüsse in dem Reparaturmittel entweichen.

Die Steuereinheit ist konfiguriert, um gemäß vorbestimmter Zeitintervalle den Wechsel zwischen Unterdruck, normalem Atmosphärendruck und Überdruck mittels Steuerung des Schaltelements 111 und insbesondere des zweiten Pumpelements 400 über eine vorbestimmte Zeitdauer hinweg alternierend, d.h. periodisch wechselnd, durchzuführen. Der Druckwechsel kann dabei diskontinuierlich oder kontinuierlich verlaufen. Mit anderen Worten ist es möglich die Druckübergänge fließend oder plötzlich, d.h. diskontinuierlich, ablaufen zu lassen.

Nach Ablauf der vorbestimmten Zeitdauer wird mittels der Steuereinheit veranlasst die Druckbeaufschlagung an der ersten Passage 104 und der zweiten Passage 106 zu beenden.

Weiterhin ist in Figur 1 schematisch dargestellt, dass der komplette Aufbau der Vorrichtung exklusive des Bearbeitungskopfes 101, der Verbindungselemente 104 A, 106 A und Teile der ersten Druckverbindung 109 und der zweiten Druckverbindung 110 in einem Gehäuse 100 umfasst sein können.

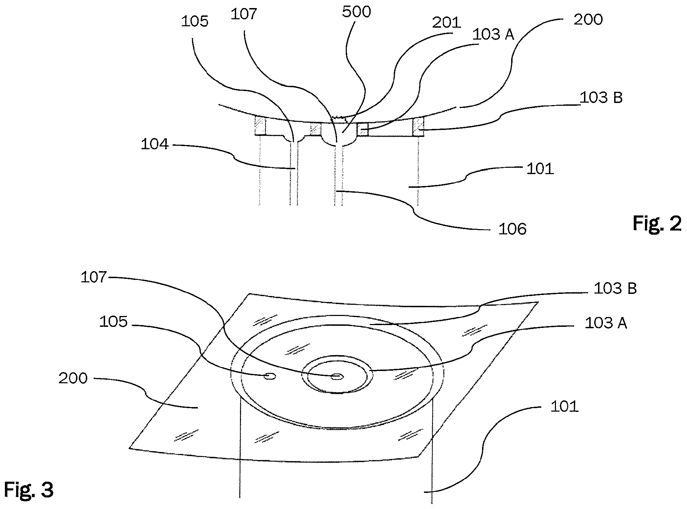

Die Figur 2 zeigt eine schematische Querschnittdarstellung eines auf einer Glasscheibe 200 bzw. Oberfläche aufgesetzten Bearbeitungskopfes 101 einer Vorrichtung zum Reparieren von Schadstellen. Die dargestellte Schnittfläche des Querschnitts verläuft hierbei parallel zur Längsachse des Bearbeitungskopfes 101. Insbesondere zeigt die Figur 2 das erste Dichtelement 103 A und das zweite Dichtelement 103 B. Das erste Dichtelement 103 A grenzt den Reparaturabschnitt 103 von dem Fixierabschnitt 102 des Bearbeitungskopfes 101 ab. Infolgedessen wird bei Kontaktierung des ersten Dichtelements 103 A mit der Oberfläche der Glasscheibe 200 eine luftschlüssige Versiegelung hergestellt, so dass das Volumen umfassend die Schadstelle 201, den Reparaturabschnitt 103 und die zweite Passage 106 mit einem Druck beaufschlagbar ist. Der Bereich zwischen der Glasscheibe 200, dem Dichtelement 103A und der zweiten Öffnung 107 stellt eine Bearbeitungsstelle 500 dar. In analoger Weise grenzt das zweite Dichtelement 103 B bei Kontaktierung mit der Glasscheibe 200 das Volumen umfassend den Raum zwischen Fixierabschnitt 102 und der Glasscheibe 200 und die erste Passage 104 von der äußeren Atmosphäre ab. Durch diese Versiegelung nach außen kann ein Druckprofil zwischen dem Fixierabschnitt 102 und der Glasscheibe 200 zuverlässig beaufschlagt werden. Die Dichtelemente 103 A, 103 B sind aus einem elastischen bzw. flexiblen Material und können sich dementsprechend Lageveränderungen bzw. Neigungsänderungen des Bearbeitungskopfes 101 an der Glasscheibe 200 anpassen und eine Versiegelung zwecks Druckbeaufschlagung zuverlässig aufrechterhalten. Weiterhin wird durch die elastischen Eigenschaften der Dichtelemente 103 A, 103 B unterstützt, dass der Bearbeitungskopf bei einer Vielzahl von Oberflächengeometrien anwendbar ist. Mit anderen Worten ist die Vorrichtung zur Glasscheibenreparatur universell einsetzbar, d.h. kann bei Glasscheiben (bspw. Kraftfahrzeugwindschutzscheiben) verschiedener Modelle und verschiedener Hersteller unverändert angewendet werden.

Die Figur 3 zeigt eine vergrößerte schematische Perspektivdarstellung eines auf einer Glasscheibe 200 angeordneten Bearbeitungskopfes 101 von unten bzw. durch die Glasscheibe 200 hindurch. Insbesondere ist die ellipsenförmige Geometrie des Bearbeitungskopfes 101 dargestellt. Diese geometrische Ausgestaltung ermöglicht eine verbesserte Anpassung des Bearbeitungskopfes 101 an die Krümmung von Glasscheiben 200. Infolgedessen wird die Haftung bzw. Fixierung des Bearbeitungskopfes 101 während des Reparaturprozesses der Schadstelle 201 beträchtlich verbessert.

Weiterhin sichtbar in Figur 3 sind die elastischen Dichtelemente 103 A, 103 B, die ebenfalls ringartig bzw. ellipsenförmig ausgebildet sein können. Es ist zudem eine Ausgestaltung der elastischen Dichtelemente 103 A, 103 B in Lamellenform möglich. Im Zusammenspiel mit der elliptischen Geometrie des Bearbeitungskopfes 101 wird die Positionierung bzw. Fixierung des Bearbeitungskopfes 101 an verschiedenen Glasscheiben unterschiedlicher Geometrie verbessert. Ebenfalls dargestellt ist die zweite Öffnung 107 der zweiten Passage 106 in dem Reparaturabschnitt 103, sowie die erste Öffnung 105 der ersten Passage 104 in dem Fixierabschnitt 102, wodurch bei Anordnung des Bearbeitungskopfes 101 an einer Glasscheibe 200 eine Druckbeaufschlagung zwischen Fixierabschnitt 102 und Glasscheibe 200 bzw. Reparaturabschnitt 103 und Glasscheibe 200 ermöglicht wird. Zudem wird ein Reparaturmittel mittels der zweiten Öffnung 107 auf die Schadstelle 201 verbracht.

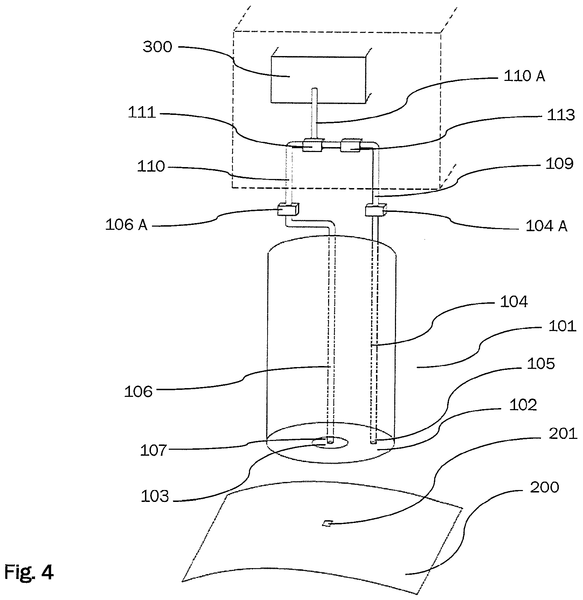

Figur 4 zeigt eine perspektivische Darstellung einer weiteren beispielhaften Ausbildung einer Vorrichtung zum Reparieren von Schadstellen einer Glasscheibe, die lediglich ein Pumpelement umfasst.

In Figur 4 sind insbesondere dargestellt ein (erstes) Pumpelement 300, welches mittels der Druckverbindung 110 A druckschlüssig mit einem Steuerelement 111 verbunden ist. Das Steuerelement 111 ist zudem mit einer ersten Druckverbindung 109 und einer zweiten Druckverbindung 110 druckschlüssig verbunden. Weiterhin ist ein Rückschlagventil 113 dargestellt, welches an der Druckverbindung 109 zwischen dem Schaltelement 111 und einem Verbindungselement 104 A angeordnet ist. Die Merkmale bezüglich des Bearbeitungskopfes 101 und der Verbindungselemente 104 A und 106 A entsprechen analog den beschriebenen Merkmalen der Figur 1 und es wird infolgedessen für eine detaillierte Beschreibung auf die Figur 1 verwiesen. Zudem kann zwischen dem Pumpelement 300 und dem Steuerelement 111 ein Überdruckventil 112 (nicht dargestellt) angeordnet werden, um eine Beaufschlagung eines Druckwertes zwischen Schadstelle 201 und dem Reparaturabschnitt 103 zu verhindern, durch den sich der Bearbeitungskopf 101 von der Glasscheibe 200 während der Reparatur lösen würde.

Eine Steuereinheit (nicht dargestellt) steuert bzw. regelt die Erzeugung eines Druckprofils bzw. eines Druckverlaufs durch das Pumpelement 300. Nach Anordnen des Bearbeitungskopfes 101 an der Glasscheibe 200 und Einfüllen eines Reparaturmittels in die zweite Passage 106 des Bearbeitungskopfes 101, steuert die Steuereinheit das Pumpelement 300 an, um einen Unterdruck zu generieren. Weiterhin wird das Steuerelement 111 von der Steuereinheit angesteuert, um eine druckschlüssige Verbindung zwischen dem Pumpelement 300 mittels der Druckverbindung 110 A und der Druckverbindung 109 sowie der Druckverbindung 110 herzustellen. Infolgedessen wird jeweils ein Unterdruck zwischen der Glasscheibe 200 und dem Fixierabschnitt 102, sowie der Schadstelle 201 und dem Reparaturabschnitt 103 beaufschlagt. Es wird somit der Bearbeitungskopf 101 an der Glasscheibe 200 fest fixiert, sowie die Schadstelle 201 bspw. von Verunreinigungen gereinigt. Nach Ablauf einer vorbestimmten Zeitdauer wird mittels der Steuereinheit das Steuerelement 111 konfiguriert, um die druckschlüssige Verbindung zwischen der ersten Druckverbindung 109 und dem Pumpelement 300 zu unterbrechen. Mittels des Rückschlagventils 113 wird jedoch der vorherrschende Druckwert, d.h. ein Unterdruck, zwischen der Glasscheibe 200 und dem Fixierabschnitt 102 aufrechterhalten. Infolgedessen bleibt der Bearbeitungskopf 101 an der Glasscheibe 200 fixiert. Entsprechend wird das Steuerelement 111 von der Steuereinheit angewiesen bzw. angesteuert, die druckschlüssige Verbindung zwischen dem Pumpelement 300 und dem zweiten Druckverlauf 110 aufrechtzuerhalten. Das Pumpelement 300 wird dann von der Steuereinheit instruiert einen atmosphärischen Normaldruck zu generieren. Mittels der druckschlüssigen Verbindung zwischen dem Pumpelement 300 und der zweiten Passage 106 des Bearbeitungskopfes 101, wird zwischen der Schadstelle 201 der Glasscheibe 200 und dem Reparaturabschnitt 103 ein atmosphärischer Normaldruck beaufschlagt. Infolgedessen werden aufgrund von Kapillareffekten Hohlräume bzw. Risse der Schadstelle 201 der Glasscheibe 200 von dem Reparaturmittel gefüllt. Nach Ablauf einer weiteren vorbestimmten Zeitdauer steuert die Steuereinheit das Pumpelement 300 an, um einen Überdruck zu erzeugen. Dieser Überdruck wird dann mittels der druckschlüssigen Verbindung zwischen dem Pumpelement 300 und der zweiten Passage 106 des Bearbeitungskopfes 101 zwischen der Schadstelle 201 und dem Reparaturabschnitt 103 beaufschlagt. Infolge des Überdrucks wird das Reparaturmittel in verbleibende Hohlräume bzw. Kavitäten der Schadstelle 201 verbracht bzw. gedrückt. Nach Ablauf einer weiteren vorbestimmten Zeitdauer wird mittels der Steuereinheit durch das Pumpelement 300 wieder ein Unterdruck an der zweiten Passage 106 beaufschlagt, wodurch Lufteinschlüsse in dem in der Schadstelle befindlichen flüssigen Reparaturmittel beseitigt werden. Die Steuereinheit stellt gleichzeitig mittels des Schaltelements 111 wieder eine druckflüssige Verbindung zwischen der ersten Druckverbindung 109 und dem Pumpelement 300 her, so dass wieder eine Beaufschlagung mit einem Unterdruck an der ersten Passage 106 ermöglicht wird. Alternativ kann jedoch die druckschlüssigen Verbindung zwischen der ersten Druckverbindung 109 und dem Pumpelement 300 weiter unterbrochen bleiben, da das Rückschlagventil 113 konfiguriert sein kann, einen Unterdruck über die gesamte Dauer des Reparaturprozesses hinweg aufrechtzuerhalten.

Die Steuereinheit ist zudem konfiguriert, um, über eine vorbestimmte Dauer hinweg, das beaufschlagte Druckprofil an der zweiten Passage 106 alternierend zu wechseln. Durch ein solches fortwährendes wechselndes Beaufschlagen der Schadstelle 201 mit verschiedenen Druckwerten bzw. Druckverläufen wird sichergestellt, dass jegliche Hohlräume bzw. Kavitäten der Schadstelle 201 mit Reparaturmittel gefüllt werden. Infolgedessen wird die Qualität der reparierten Schadstelle 201 auch unter Einsatz lediglich eines Pumpelements 300 erheblich verbessert.

Nach Ablauf der vorbestimmten Dauer wird mittels der Steuereinheit die Druckbeaufschlagung der ersten Passage 104 und der zweiten Passage 106 beendet.

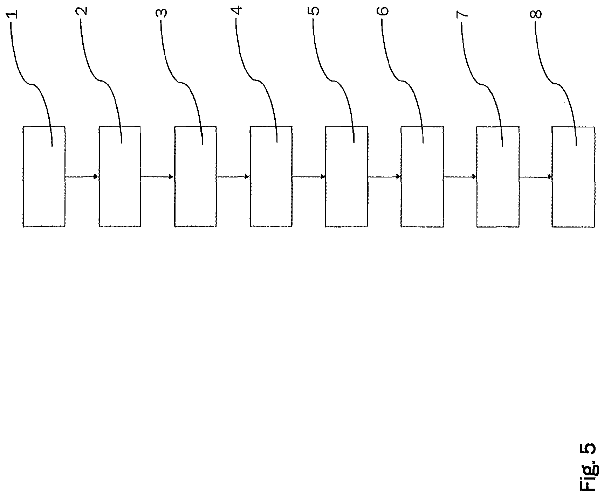

Figur 5 zeigt ein Flussdiagramm umfassend ein Beispiel von Verfahrensschritten zum Reparieren einer Schadstelle 201 der Glasscheibe 200.

In Schritt 1 wird durch die Steuereinheit eine erste Eingabe erfasst. In Reaktion auf diese Eingabe wird mittels der Steuereinheit die Vorrichtung zur Reparatur einer Schadstelle 201 einer Glasscheibe 200 aktiviert.

in Schritt 2 wird ein Bearbeitungskopf 101 an bzw. über der Schadstelle 201 der Glasscheibe 200 angeordnet.

In Schritt 3 wird durch die Steuereinheit eine zweite Eingabe erfasst, wodurch ein Automatisierungsprozess in Gang gesetzt wird. Dieser Automatisierungsprozess leitet die Reparatur der Schadstelle 201 ein.

Mittels der Steuereinheit wird ein Pumpelement 300 instruiert einen Unterdruck zu generieren. Wie beispielsweise in Figur 1 dargestellt, wird dieser Unterdruck mittels einer druckschlüssigen Verbindung zwischen dem Pumpelement 300 und der zweiten Passage 104 des Bearbeitungskopfes 101 zwischen der Glasscheibe 200 und dem Fixierabschnitt 102 beaufschlagt, wodurch der Bearbeitungskopf 101 aufgrund eines Druckgradienten zwischen dem Atmosphärendruck, der den Bearbeitungskopf 101 umgibt, und dem beaufschlagten Unterdruck an der Glasscheibe fixiert wird (Schritt 4).

Während der Unterdruck anliegt wird ein Reparaturmittel in die zweite Passage 106 des Bearbeitungskopfes verbracht. Nach dem Anlegen des Unterdrucks an der Schadstelle 201 für eine vorbestimmte Zeitdauer wird ein Normaldruck (Atmosphärendruch) und der Schadstelle 201 angelegt. Das flüssige Reparaturmittel fließt, beispielsweise unter dem Einfluss des Schwerefelds, auf die Schadstelle 201 (Schritt 5).

Mittels der Steuereinheit wird dann durch ein oder mehrere Pumpelemente ein zumindest teilweise alternierender Druckverlauf zwischen der Schadstelle 201 und dem Reparaturabschnitt 103 des Bearbeitungskopfes 101 über eine vorbestimmte Dauer hinweg beaufschlagt (Schritt 6).

Nach Ablauf der vorbestimmten Dauer wird die Druckbeaufschlagung durch Veranlassung der Steuereinheit eingestellt, der Bearbeitungskopf 101 von der Glasscheibe 200 entfernt und die mit Reparaturmittel gefüllte Schadstelle 201 mit Licht aus einer Lichtquelle bestrahlt, wodurch eine Aushärtung des flüssigen Reparaturmittels verursacht oder beschleunigt wird (Schritt 7).

Nachfolgend wird die Schadstelle 201 weiterbearbeitet. Insbesondere wird mittels einer Kombination der Prozesse Schleifen, Reinigen, Wachsen und Polieren die reparierte Schadstelle 201 der Oberflächenstruktur der unbeschädigten Glasscheibengebiete der Glasscheibe 200 angepasst (Schritt 8).

Infolgedessen ist eine normale Weiterbenutzung der Glasscheibe möglich, wodurch ein vollständiger Ersatz der beschädigten Glasscheibe vermieden wird und insofern Kosten vermieden werden.

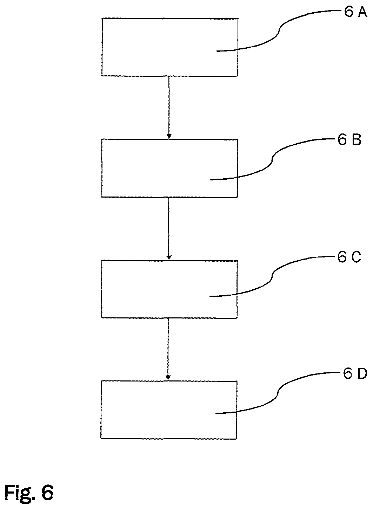

Figur 6 zeigt ein Flussdiagramm, welches insbesondere die Verfahrensschritte hinsichtlich der Druckbeaufschlagungen während der Reparaturdauer detaillierter erläutert.

Insbesondere wird im Schritt 6A zwischen der Schadstelle 201 und dem Reparaturabschnitt 103 des Bearbeitungskopfes 101 über ein erstes Zeitintervall hinweg ein Unterdruck beaufschlagt. Durch diesen Unterdruck kann die Schadstelle von Verunreinigungen, wie beispielsweise Staubpartikeln, gesäubert werden.

Während eines zweiten Zeitintervalls wird zwischen der Schadstelle 201 und dem Reparaturabschnitt 103 des Bearbeitungskopfes 101 ein atmosphärischer Normaldruck angewendet bzw. beaufschlagt.

Während des ersten und zweiten Zeitintervalls wird das flüssige Reparaturmittel in bestehende Hohlräume bzw. Kavitäten und Risse der Schadstelle 201 bspw. mittels Kapillarwirkung verbracht (Schritt 6B).

Nachfolgend wird während eines dritten Zeitintervalls zwischen der Schadstelle 201 und dem Reparaturabschnitt 103 ein Überdruck beaufschlagt. Durch diesen Überdruck wird das flüssige Reparaturmittel in verbleibende Hohlräume der Schadstelle gedrückt und füllt diese auf (Schritt 6C).

Im Verfahrensschritt 6D wird dann die zweite Passage 106, und somit auch das Volumen zwischen der Schadstelle 201 und dem Reparaturabschnitt 103, periodisch wechselnd mit einem Unterdruck, atmosphärischen Normaldruck und einem Überdruck bis zum Ende einer vorbestimmten Dauer beaufschlagt. Anders ausgedrückt wird über die vorbestimmte Dauer hinweg, die Schadstelle und das darin befindliche flüssige Reparaturmittel mit periodisch wechselnden Druckwerten beaufschlagt, wodurch die Güte der Schadstellenreparatur erheblich erhöht wird, da insbesondere Lufteinschlüsse in der mit Reparaturmittel gefüllten Schadstelle 201 beseitigt bzw. vermieden werden.

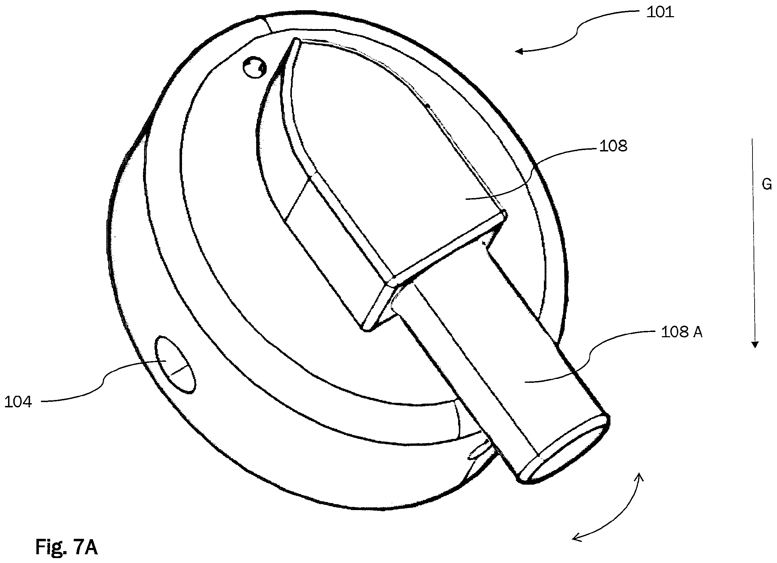

Fig. 7 A zeigt eine Draufsicht des Bearbeitungskopfes mit einer drehbaren Drehelement-Stift-Konfiguration, die das flüssige Reparaturmittel umfasst.

Die in Figur 7A dargestellte Perspektive zeigt eine Ansicht des Bearbeitungskopfes 101 in Blickrichtung auf eine Schadstelle einer Glasscheibe.

Insbesondere ist in der in Figur 7A dargestellten Draufsicht des Bearbeitungskopfes 101 die erste Passage 104 an einem Wandabschnitt des Bearbeitungskopfes sichtbar. Ferner ist ein Drehelement 108 mit einer Kammer (nicht dargestellt) gezeigt, die an dem Bearbeitungskopf 101 angeordnet ist und zudem gegenüber dem Bearbeitungskopf 101 drehbar ist. Weiterhin zeigt Figur 7A einen Stift 108 A, der konfiguriert ist, um in eine Öffnung der Kammer eingesetzt zu werden bzw. über ein Gewinde eingedreht zu werden. Der Stift 108 A ist ferner konfiguriert, um die Reparaturflüssigkeit zu umfassen. Beispielsweise kann der Stift 108 A eine Patrone oder eine Kapsel umfassen, worin die Reparaturflüssigkeit enthalten ist oder die Reparaturflüssigkeit bzw. das flüssige Reparaturmittel können direkt in einen Hohlraum des Stifts 108 A eingebracht werden. Die Kammer ist mittels einer dritten Passage (nicht dargestellt) mit der Bearbeitungsstelle 500 verbunden. Hierbei kann die dritte Passage in die zweiten Passage 106 münden.

Insbesondere umfasst das Drehelement 108 einen rohrartigen Vorsprung, der mit dem Drehelement 108 einen Winkel von 90° ausbildet und sich von dem Drehelement 108 in den Bearbeitungskopf 101 hinein erstreckt (nicht dargestellt). Der in den Bearbeitungskopf 101 eingeführte rohrartige Vorsprung des Drehelements 108 wird zudem von Dichtelementen umfasst.

Der rohrartige Vorsprung umfasst insbesondere eine Durchgangspassage, die an einem Ende in dem Bearbeitungskopf mündet und an dem gegenüberliegenden Ende in der Kammer des Drehelements 108 mündet.

Infolgedessen wird mittels des rohrartigen Vorsprungs des Drehelements 108 die dritte Passage ausgebildet, mittels derer die Reparaturflüssigkeit aus der Kammer auf die Schadstelle verbringbar ist.

In der in Figur 7A dargestellten Situation des Bearbeitungskopfes ist das Drehelement 108 mit Kammer in einer Position angeordnet, bei der die Reparaturflüssigkeit nicht von dem Stift 108 A in die Kammer und über die dritte Passage zur zweiten Öffnung 107 und in die bzw. auf die Bearbeitungsstelle 500 fließen kann.

Insbesondere befinden sich in der dargestellten Anordnung der Figur 7A das Drehelement 108 mit Kammer und der darin eingeführte Stift 108 A in einer Position, bei der die Reparaturflüssigkeit nicht auf den Reparaturabschnitt fließen kann, da die Schwerkraft die Reparaturflüssigkeit in dem Stift 108 A bzw. der Kammer zurückhält, so dass das flüssige Reparaturmittel nicht in die dritte Passage gelangen kann (zur Verdeutlichung sei angemerkt, dass die Schwerkraft in Figur 7A in Richtung des Vektors G wirkt).

Mittels einer Drehbewegung des Drehelements 108 mit der Kammer auf eine Durchflussposition, die beispielsweise durch ein Ausüben eines Drehmoments an dem Stift 108 A oder dem Drehelement 108 mit der Kammer, durchgeführt werden kann, wird es der Reparaturflüssigkeit ermöglicht unter dem Einfluss der Schwerkraft auf den Reparaturabschnitt und damit in die bzw. auf die Bearbeitungsstelle 500 zu fließen. Genauer gesagt kann das flüssige Reparaturmittel unter dem Einfluss der Schwerkraft von dem Stift 108 A bzw. der Kammer in die dritte Passage des Bearbeitungskopfes 101 fließen und somit auf die Schadstelle 201 gelangen.

Einer Durchlassposition entspricht beispielsweise eine Anordnung des Drehelements 108 mit Kammer und des Stiftes 108 A, bei der das Drehelement 108 und Stift 108 A um ca. 180° aus der in Figur 7A dargestellten Konfiguration verdreht werden. Somit stellen das Drehelement 108 mit Kammer und der Stift 108 A eine Hebelanordnung oder einen Hebel dar, bei der mittels Drehbewegung des Hebels die Reparaturflüssigkeit auf den Reparaturabschnitt verbracht werden kann.

Fig. 7B zeigt eine Unteransicht des Bearbeitungskopfes 101 mit einer drehbaren Drehelement-Stift-Konfiguration, die das flüssige Reparaturmittel umfasst.

in der in Figur 7B dargestellten Perspektive sind der Bearbeitungskopf 101 mit dem Fixierabschnitt 102, dem Reparaturabschnitt 103, dem ersten elastischen Dichtelement 103 A, dem zweiten elastischen Dichtelement 103 B, den ersten und zweiten Öffnungen 105, 107 und der ersten Passage 104 gezeigt. Zudem sind ferner das an dem Bearbeitungskopf 101 drehbar angeordnete Drehelement 108 mit Kammer und der in die Kammer eingeführte oder eingesetzte Stift 108 A dargestellt, die in ihrer Einheit einen drehbaren Hebel repräsentieren. Wie bereits oben erläutert, wird der Bearbeitungskopf 101 auf der Schadstelle 201 einer Glasscheibe 200 angeordnet. Genauer gesagt wird der Reparaturabschnitt 103 des Bearbeitungskopfes 101 derart auf einer beschädigten Glasscheibe 200 angebracht, dass sich die Schadstelle 201 und der Reparaturabschnitt 103 überlappen.

Der Stift 108 A, der in die Kammer eingeführt ist, kann die Reparaturflüssigkeit enthalten. In der in Figur 7B dargestellten Position des Drehelements mit Kammer und des Stiftes 108 A kann die Reparaturflüssigkeit jedoch nicht unter dem Einfluss der Schwerkraft aus der Kammer auf den Reparaturabschnitt 103 geleitet bzw. verbracht werden, sondern wird, in der in Figur 7B dargestellten Konfiguration, durch die Schwerkraft in dem Stift 108 A zurückgehalten (die Richtung der Schwerkraft wird durch den Vektor G in Figur 7B indiziert).

Mittels einer Drehbewegung der Hebelanordnung (Drehelement 108 mit Kammer und Stift 108 A) auf eine Durchlassposition, d.h. einer Drehung des Hebels um 180° aus der in Figur 7B dargestellten Anordnung, wird die Reparaturflüssigkeit mittels der dritten Passage (nicht dargestellt), die die Kammer mit dem Reparaturabschnitt 103 verbindet, zumindest durch die untere zweite Öffnung 107b und/oder durch die untere zweite Öffnung 107b und die obere zweite Öffnung 107a auf eine Schadstelle 201 der Glasscheibe 200 verbracht bzw. geleitet.

Infolgedessen wird mittels einer Drehbewegung des Hebels (die Einheit aus Drehelement 108 mit Kammer und Stift 108 A) auf eine Durchlassposition bzw. beispielsweise nach oben, die Reparaturflüssigkeit unter dem Einfluss der Schwerkraft auf die Schadstelle 201 verbracht.

Durch das Vorsehen der zwei zweiten Öffnungen 107a und 107b kann sichergestellt werden, dass die Reparaturflüssigkeit annähernd vollständig auf die Schadstelle 201 verbracht werden kann. Dies resultiert daraus, dass durch die beispielsweise unten liegende zweite Öffnung 107b sichergestellt ist, dass annähernd die gesamte Reparaturflüssigkeit aus dem Bearbeitungskopf 101 abfließen und auf die Schadstelle 201 auffließen kann. Gleichzeitig ist gewährleistet, dass durch die weiter oben liegende zweite Öffnung 107a nach wie vor barrierefrei in den weiteren Zyklen bzw. Bearbeitungsschritten Luft abgesaugt bzw. ein Überdruck angelegt werden kann. Durch das Vorsehen der beiden zweiten Öffnungen 107a und 107b ist auch für sehr flache Scheiben (bspw. 35°) ein problemloses Reparieren möglich.

Es sei an dieser Stelle ausdrücklich angemerkt, dass die in dieser Figur dargestellten und beschriebenen zwei zweiten Öffnungen 107a und 107b für sämtliche Ausführungsformen eingesetzt werden können.

Weiterhin sei angemerkt, dass natürlich auch andere als die dargestellten Öffnungen vorgesehen werden können, d. h. beispielsweise anstatt der kreisförmigen Öffnungen könnten auch entsprechende Schlitze oder ähnliches eingesetzt werden, je nach Einsatzzweck. Darüber hinaus soll die dargestellte Ausführungsform keine Einschränkung auf lediglich zwei zweite Öffnungen darstellen, es könnte auch der Einsatz von mehr als zwei zweiten Öffnungen sinnvoll sein.

Darüber hinaus soll an dieser Stelle darauf hingewiesen werden, dass auch der Einsatz eines zweiten zusätzlichen Unterdruckrings denkbar ist. Hierbei würde ein inneres zweites elastisches Dichtelement und ein äußeres zweites elastisches Dichtelement eingesetzt werden. Innerhalb von jedem dann gebildeten Ring, einem äußeren Fixierabschnitt und einem inneren Fixierabschnitt wären jeweils eine äußere erste Öffnung und eine innere zweite Öffnung vorgesehen, um in jedem dieser Fixierabschnitte einen entsprechenden Unterdruck anlegen zu können. Diese ersten Öffnungen (die innere erste Öffnung und die äußere erste Öffnung) würden dann jeweils an das erste Pumpelement 300 zum Anlegen eines Unterdrucks angeschlossen werden können.

Durch das Vorsehen eines zweiten Unterdruckrings kann eine weitere Optimierung dahingehend realisiert werden, dass auch stärker gekrümmte Scheiben bzw. stärker gekrümmte Abschnitte von Scheiben repariert werden können ohne ein Ablösen des Bearbeitungskopfes 101 während der Bearbeitung zu riskieren.

Weiterhin kann der Bearbeitungskopf 101 derart konfiguriert sein, dass das Rückschlagventil 113 von dem Bearbeitungskopf 101 umfasst ist, so dass ein Fixieren des Bearbeitungskopfes 101 an einer zu reparierenden Glasscheibe ermöglicht wird, ohne dass eine kontinuierliche Druckbeaufschlagung (Unterdruck) durch das erste Pumpelement 300 über die Dauer des Reparaturprozesses hinweg notwendig ist.

Erfindungsgemäß besteht ein Reparaturzyklus grundsätzlich aus drei Druckzuständen. Zustand Unterdruck, Zustand atmosphärischer Druck und Zustand Überdruck. Die Zustandsreihenfolge im Reparaturzyklus kann grundsätzlich wie folgt ausgebildet werden: Unterdruck - atmosphärischer Druck - Überdruck - Unterdruck - atmosphärischer Druck - Überdruck - Unterdruck usw.

Das erste Pumpelement 300 kann während dem Reparaturvorgang ständig Unterdruck zur Verfügung stellen (d. h. beispielsweise, dass die betreffende Pumpe ständig läuft und Unterdruck produziert).

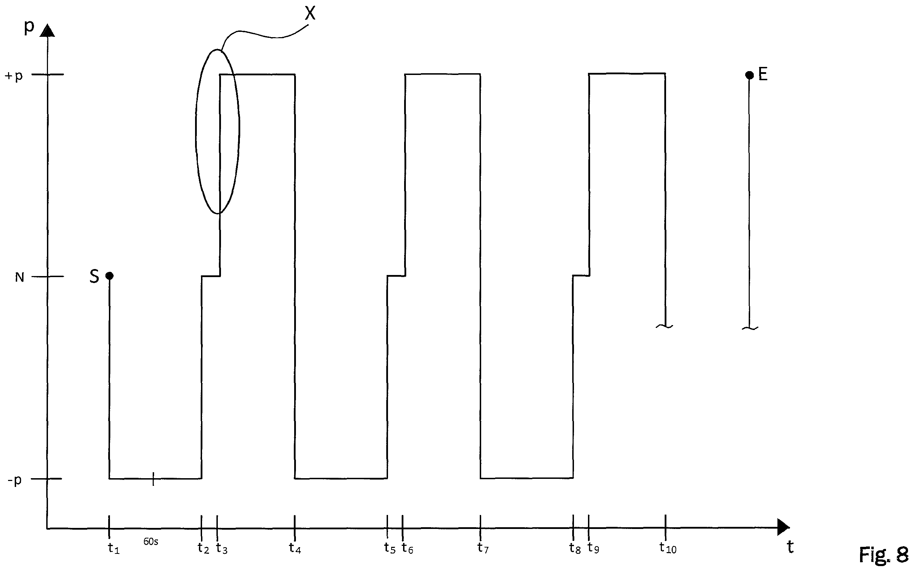

In der Figur 8 ist ein Druckverlauf an einer Bearbeitungsstelle 500 (siehe Figur 2) beispielhaft dargestellt. Auf der Ordinate ist der Druck und auf der Abszisse die Zeit angegeben. Auf der Ordinate bedeutet +p ein Überdruck, N atmosphärischen Druck (bzw. Normaldruck) und -p Unterdruck. Nach dem Start des Systems bei Punkt S zum Zeitpunkt $t_1$ wird ein Unterdruck an der Bearbeitungsstelle 500 angelegt. Dies kann dadurch erfolgen, dass das schon laufende erste Pumpelement 300 über das Schaltelement 111 mit dem Reparaturabschnitt 103 verbunden wird. Das Anlegen des Unterdrucks erfolgt sehr schnell bzw. schlagartig, da das erste Pumpelement 300 schon läuft und die Zeit des Anlegens des Unterdrucks lediglich bspw. von der Schaltzeit des Schaltelements 111 abhängt, wobei die Schaltzeit des Schaltelements 111 sehr kurz ist und beispielsweise 0,1 bis 0,5 s beträgt. In diesem Zeitraum fällt der Druck von Normaldruck auf Unterdruck. Der Unterdruck wird zwischen $t_1$ und $t_2$ aufrechterhalten. Beispielsweise kann diese Zeit 60 Sekunden betragen. Nachfolgend wird das System wieder auf Normaldruck gestellt. Hierbei kann das Schaltelement 111 die Verbindung zu dem ersten Pumpelement 300 unterbrechen. Danach wird der Normaldruck zwischen dem Zeitpunkt $t_2$ und $t_3$ aufrechterhalten. Dieser Zeitraum kann beispielsweise 10 Sekunden betragen. Anschließend kann das Schaltelement 111 die Verbindung zu dem ersten Pumpelement 300 unterbrechen und das zweite Pumpelement 400 zum Erzeugen eines Überdrucks kann hoch- bzw. angefahren werden, wobei im Wesentlichen gleichzeitig durch das Schaltelement 111 eine Verbindung zu dem zweiten Pumpelement 400 hergestellt wird. Zwischen der Zeit $t_3$ und $t_4$ wird dieser Überdruck aufrechterhalten für eine Zeitdauer von beispielweise 60 Sekunden. Danach wird das Schaltelement 111 zum Zeitpunkt $t_4$ derart angesteuert, dass wieder eine Verbindung mit dem ersten Pumpelement 300, das permanent läuft, hergestellt wird. Infolgedessen ändert sich der Druck an der bearbeiteten Stelle schlagartig von einem Überdruck +p zu einem Unterdruck -p. Dieser kann für den Zeitraum $t_4$ bis $t_5$ aufrechterhalten werden. Der Druck fällt in einem sehr kurzen Zeitraum von Überdruck auf Unterdruck. Der Zeitraum liegt bspw im Bereich von 0,1 bis 0,5s. Nach dem Anlegen des Unterdrucks bzw. im Wesentlichen gleichzeitig dazu (Zeitpunkt $t_4$) kann das zweite Pumpelement 400 wieder abgeschaltet bzw. heruntergefahren werden. Der Unterdruck wird zwischen $t_4$ und $t_5$ aufrechterhalten. Beispielsweise kann diese Zeit 60 Sekunden betragen. Nachfolgend wird das System wieder auf Normaldruck gestellt. Hierbei kann das Schaltelement 111 die Verbindung zu dem ersten Pumpelement 300 unterbrechen. Danach wird der Normaldruck zwischen dem Zeitpunkt $t_5$ und $t_6$ aufrechterhalten. Dieser Zeitraum kann beispielsweise 10 Sekunden betragen. Zum Zeitpunkt $t_6$ wird wiederum das Schaltelement 111 für eine Verbindung zum zweiten Pumpelement 400 geschaltet und das zweite Pumpelement 400 wird aktiviert, so dass zum Zeitpunkt $t_6$ wiederum ein Überdruck angelegt wird. Derartige Überdruck-/Unterdruckzyklen werden abhängig von dem Reparaturvorgang mit einer vorbestimmten Häufigkeit bzw. mit einer vorbestimmten Anzahl wiederholt bis der Reparaturvorgang beim Punkt E zum Ende kommt.

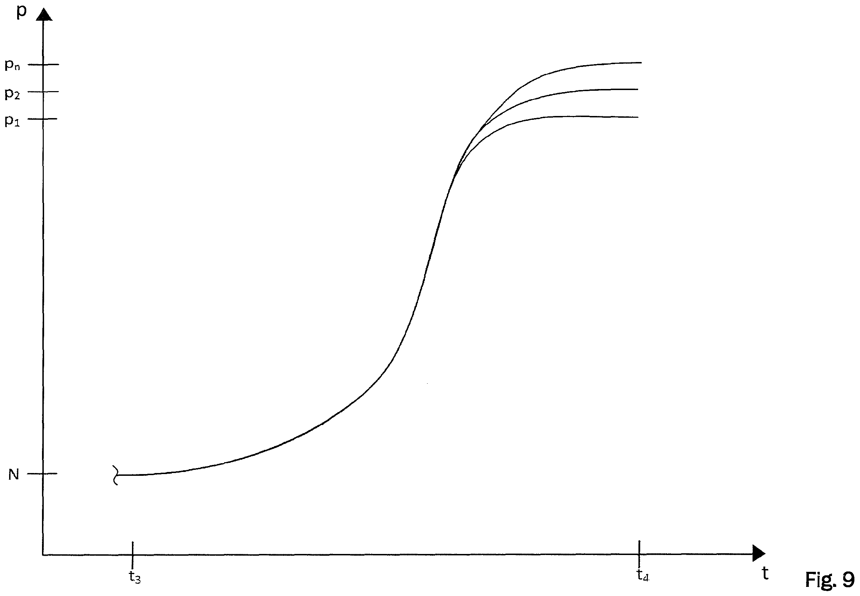

In der Figur 9 ist schematisch ein vergrößerter Abschnitt eines Druckanstiegsvorgangs dargestellt, der in der Figur 8 mit X gekennzeichnet ist. In der Figur 9 ist dargestellt, dass der Druckanstieg, obwohl schematisch in der Figur 8 als stufenförmig dargestellt, sanft und gleichmäßig ansteigt. Die Zeit, die beispielsweise zwischen $t_3$ bzw. dem Zeitpunkt einer Verbindung mit dem zweiten Pumpelement 400 und dem Erreichen von +p vergeht, kann beispielsweise 5 bis 60s betragen. Weiterhin kann das System derart ausgelegt werden, dass bei jedem Wechsel von Unterdruck auf Überdruck ein etwas höher Überdruck eingestellt wird, beispielsweise beim ersten Hochfahren ein Druck $p_1$, dann $p_2$ und letztendlich der Maximaldruck $p_n$. An dieser Stelle sei angemerkt, dass der Maximaldruck $p_n$ durch das Überdruckventil 112 hochgenau eingestellt werden kann. Mögliche Drücke wären beispielsweise für $p_1$ $3{,}85 \times 10^5$ Pa, $p_2$ $3{,}90 \times 10^5$ Pa und $p_n$ $4{,}00 \times 10^5$ Pa.

Bspw. kann nach dem Hochfahren des zweiten Pumpelements 400 zeitabhängig folgende Drücke erreicht werden:

$$\text{nach 6s} \rightarrow 2 \times 10^5 \text{ Pa}$$

$$\text{nach 9s} \rightarrow 3 \times 10^5 \text{ Pa}$$

$$\text{nach 11s} \rightarrow 3{,}5 \times 10^5 \text{ Pa}$$

$$\text{nach 17s} \rightarrow 3{,}8 \times 10^5 \text{ Pa}$$

$$\text{nach 30s} \rightarrow 3{,}83 \times 10^5 \text{ Pa}$$

$$\text{nach 60s} \rightarrow 3{,}85 \times 10^5 \text{ Pa}$$

Hierbei würde sich die Steigung (Druckanstiegssteigung) der Kurve von zunächst 0,3 [$10^5$Pa/s] auf 0,25, dann 0,05 und zum Enddruck hin (in diesem Fall $p_1$) auf 0,001 verringern:
Der letzte Druckwert würde bspw. $p_1$ kurz vor bzw. bei $t_4$ entsprechen. Im nächsten Zyklus würde dann bspw. ein Druck von $3{,}90 \times 10^5$ Pa anliegen ($p_2$ kurz vor bzw. bei $t_7$). Im nächsten Zyklus würde dann bspw. ein Druck von $4{,}0 \times 10^5$ Pa anliegen ($p_n$ kurz vor bzw. bei $t_{10}$).

Weiterhin ist anzumerken, dass durch das Hochfahren/Anfahren des zweiten Pumpelements 400 zu den Zeitpunkten $t_3$, $t_6$, ... in der Anfangsphase ein sehr sanfter Anstieg des Druck ergibt, wobei die Druckanstiegssteigung von 0 auf die vorgenannten bspw. 0,3 sanft und gleichmäßig ansteigt. Auch dieser sanfte bzw. gleichmäßige Anstieg trägt zu dem optimalen Reparaturergebnis bei.

Wie schon vorstehend erwähnt, wird durch den permanenten Betrieb des ersten Pumpelements 300 ständig Unterdruck zur Verfügung gestellt. Abhängig von der Schaltung der entsprechenden Schaltelemente kann beispielsweise zum Zeitpunkt $t_1$, $t_4$, $t_7$ schlagartig von Überdruck auf Unterdruck geschaltet werden bzw. schlagartig an der Bearbeitungsstelle 500 ein Unterdruck angelegt werden, so dass eventuell in der Schadstelle verbliebene Luft schlagartig losgerissen werden und beispielsweise über das obere Loch (zweite Öffnung 107a) abgesaugt werden kann.

Wie vorstehend schon zur Beschreibung der Figur 7b erwähnt, kann durch das Vorsehen der beiden zweiten Öffnungen 107a und 107b sichergestellt werden, dass sogar bei einer 50%igen Überfüllung des Systems mit Reparaturharz und einer Glasneigung von beispielsweise 35° vollkommen barrierefrei durch die oberezweite Öffnung 107a abgesaugt bzw. die Feuchtigkeit oder ähnliches abtransportiert werden kann, wenn der Unterdruckzyklus vorliegt bzw. Unterdruck angelegt ist.

Während dem Vorliegen des Unterdrucks kann die Reparaturflüssigkeit eingebracht werden und auf die Schadstelle fließen. Durch den vorliegenden Unterdruck kann diese von der Schadstelle sozusagen eingesaugt werden. Nach der Erzeugung des Unterdrucks und dem Einbringen der Reparaturflüssigkeit erfolgt, wie in Fig 8 dargestellt, zunächst das Einstellen eines atmosphärischen Zustands (Normaldruck). Dadurch kann die Reparaturflüssigkeit im weiteren Verlauf vollkommen druck- und verwirbelungsfrei in die Schadstelle einfließen, (dieser Zeitpunkt liegt beispielsweise zwischen $t_2$ und $t_3$ vor).

Schlagartig auf die Reparaturstelle einwirkender Überdruck wird dadurch vollständig vermieden und eine sanfte, teilweise Befüllung des Schadens kann stattfinden. Weiterhin kann sich in der Schadstelle befindliche Luft druck- und verwirbelungsfrei aus der Schadstelle bewegen. Eventuell vorhandene Luftbläschen können dadurch sehr effektiv an den oberen Rand des Reparaturabschnitts steigen und sich in den abgesaugten Luftstrom bewegen.

Nach dem sanften, drucklosen Teilbefüllen des Schadens beginnt der Überdruckzyklus. Durch das jetzt erst anlaufende zweite Pumpelement 400 wird ein langsam ansteigender Überdruck über dem Reparaturabschnitt erzeugt (siehe beispielsweise Figur 9). Dieser langsame Anstieg wird durch ein hochpräzises Überdruckventil 112, das als Bypass-Ventil ausgebildet sein kann, am druckseitigen Ausgang geregelt, so dass kein Druckstoß entsteht. Wenn das zweite Pumpelement 400 die volle Förderleistung erreicht hat und das Überdruckventil 112 seine maximale Durchlasskapazität erreicht hat, steht der volle Reparaturdruck $p_n$ zur Verfügung. Durch diesen Vorgang ist eine vollständige bzw. nahezu vollständige schonende Befüllung möglich. Durch diese Konstruktion kann ein "sanfter" Reparaturdruck von beispielsweise ca. $4*10^5$ Pa erzielt werden, der bisher zum Reparieren von beispielsweise Steinschlägen als technisch nahezu unmöglich angesehen wurde, ohne diese zu überfüllen. Dadurch können auch größere Steinschläge mit stattlicher Rissbildung befüllt werden, bei denen handelsübliche Steinschlagreparatursysteme längst an ihre Grenzen stoßen.

Nach der Überdruckphase geht es schlagartig zur Unterdruckphase (beispielsweise zum Zeitpunkt $t_4$). Innerhalb von weniger als beispielsweise 0,2 Sekunden können beispielsweise $-0,85*10^5$ Pa (relativ zum Normaldruck) erreicht werden. Dies entspricht einem absoluten Druckunterschied über der Schadstelle von ca. $4,85*10^5$ Pa in einem Sekundenbruchteil. In der Schadstelle eventuell verbliebene Lufteinschlüsse werden dadurch losgerissen und beispielsweise durch die obere zweite Öffnung 107a abgesaugt. Das heißt, dass ein Schaden, sofern notwendig, während jedem Unterdruckzyklus entgast werden kann.

Weiterhin sei angemerkt, dass nach dem drucklosen Teilbefüllen des Schadens mit Reparaturharz durch die nachfolgenden weiteren Zyklen eine oder im Wesentlichen nahezu vollständige Befüllung der Schadstelle erreicht werden kann, ohne die Schadstelle weiter aufzureißen, wodurch sehr gute Reparaturergebnisse erzielt werden können.

Weiterhin sei angemerkt, dass für den sehr unwahrscheinlichen Fall, dass durch einen Strom- oder Pumpenausfall ein Unterdruckverlust auftreten sollte, durch das vorgesehene Rückschlagventil 113 ein Ablösen des Arbeitskopfes für mindestens 15 Minuten sichergestellt ist.

Durch die Überwachung des Unterdrucks, durch die Konstruktion des Reparaturkopfes derart, dass keine beweglichen Teile vorhanden sind, die während des Reparaturvorgangs einen Unterdruckverlust im Fixierabschnitt 102 verursachen könnten und dadurch, dass das Rückschlagventil 113 vorgesehen ist, welches ein Ablösen des Arbeitskopfes für mindestens 15 Minuten sicherstellt, kann eine sehr hohe Einsatzsicherheit gewährleistet werden.

Weiterhin ist es möglich durch die Verwendung einer reinen Überdruckpumpe, dem zweiten Pumpelement 400, ein Überdruckventil 112 als Bypass-Ventil auszubilden ohne auf eine Unterdruck erzeugende Funktion dieser Pumpe Rücksicht nehmen zu müssen. Ein überhöhter Druck wird durch das Überdruckventil 112 abgeleitet, so dass ständig ein konstanter, kontrollierter und ideal eingestellter Überdruck zur Verfügung steht. Es kann weiterhin vorteilhaft sein, permanent einen etwas zu hohen Druck durch das zweite Pumpelement 400 zu erzeugen, wobei dann dieser etwas zu hohe Druck durch das Überdruckventil 112 auf den Idealdruck abgesenkt wird. Daher können eventuell auftretende Spannungsschwankungen der Stromversorgung weitestgehend kompensiert werden und jederzeit ein optimales Reparaturergebnis erzielt werden.

Weiterhin kann der ideale Überdruck beispielsweise über einen Drucksensor überwacht werden, wobei bei Unterschreiten oder Überschreiten des Idealdrucks eine Alarmmeldung generiert werden kann.

Darüber hinaus kann durch das zyklische Anfahren des zweiten Pumpelements 400 (siehe beispielsweise die Zeitpunkte $t_3$, $t_6$ usw.) der Verschleiß bezüglich der Überdruckerzeugung halbiert werden, da die Pumpe nur dann in Betrieb genommen wird, wenn Überdruck benötigt wird. Daher wird die Pumpe langlebiger sein und über einen längeren Zeitpunkt den korrekten Überdruck erzeugen können, der zum vollständigen Befüllen des Schadens benötigt wird.

Durch das zyklische Ein- und Ausschalten des zweiten Pumpelements 400 wird, wie vorstehend schon erläutert, der Reparaturabschnitt des Arbeitskopfes nicht schlagartig mit Überdruck beaufschlagt, sondern schonend mit einer vorbestimmten Steigung, wobei sowohl das Anfahren (Hochfahren) als auch das Erreichen des jeweiligen Überdrucks ($p_1$, $p_2$, $p_n$) mit einer gleichmäßigen bzw. sinkenden Steigung (siehe Figur 9) realisiert werden kann. Durch das sanfte Hochfahren und das sanfte Einfahren in den jeweiligen Zyklusüberdruck ($p_1$, $p_2$, $p_n$) kann das Reparaturergebnis stark optimiert werden und insbesondere auch das Risiko des Weiterreißens während der Reparatur der Schadstelle stark minimiert werden.

Durch diesen langsam ansteigenden Reparatur-Überdruck können auch eventuell im oberen Teil des Reparaturabschnitts noch vorhandene kleine Luftansammlungen nicht mit der Reparaturflüssigkeit verwirbelt und somit nicht in die Schadstelle eingepresst werden. Dies beeinflusst zusätzlich die technische und optische Qualität der Reparatur positiv.

Ausdrücklich sei an dieser Stelle noch erwähnt, dass natürlich die in der Figur 9 dargestellten Drücke $p_1$, $p_2$, $p_n$ auch von Zyklus zu Zyklus gleich sein können, d.h. das auch schon beim ersten Anfahren des zweiten Pumpelements 400 der Druck $p_n$ eingestellt werden kann (die Drücke $p_1$, $p_2$, usw. würden dann nicht angefahren werden). Durch den vorgenannten sanften Anstieg der Anfangsphase und dem weiteren sanften Einlaufen in den jeweiligen Maximaldruck ist auch bei nur einem vorbestimmten Maximaldruck für jeden Überdruckzyklus ein sehr gutes Ergebnis erzielbar. Dieses sehr gute Ergebnis kann durch ein stufenweises Hochfahren in dem jeweiligen Maximaldruck noch zusätzlich weiter optimiert werden, sofern gewünscht und notwendig.

Die vorstehend genannten Ausführungsformen und Beispiele können in beliebiger Weise miteinander kombiniert werden.

Zusammenfassend ist festzuhalten, dass durch die vorliegende Erfindung der Reparaturprozess stark vereinfacht und die Qualität des Endprodukts deutlich erhöht wird. Somit wird die Güte der reparierten Schadstelle stark verbessert. Es kann somit in vielen Fällen vermieden werden, dass eine Glasscheibe komplett ausgetauscht werden muss, wodurch Kosten eingespart werden.

## Patentansprüche

1. Eine Vorrichtung zum automatisierten Reparieren einer Schadstelle (201) einer Glasscheibe (200) umfassend,

einen Bearbeitungskopf (101), der konfiguriert ist an der Glasscheibe (200) angeordnet zu werden, mit

einem Fixierabschnitt (102), der konfiguriert ist, den Bearbeitungskopf (101) an der Glasscheibe (200) zu fixieren;
einem Reparaturabschnitt (103), der konfiguriert ist, die Schadstelle (201) mit einem Reparaturmittel zu füllen;
einer ersten Passage (104) mit einer ersten Öffnung (105), die in dem Fixierabschnitt (102) mündet und die konfiguriert ist mit einem Unterdruck beaufschlagt zu werden, wobei mittels der ersten Öffnung (105) der Unterdruck zwischen der Glasscheibe (200) und dem Fixierabschnitt (102) beaufschlagbar ist;
einer zweiten Passage (106) mit einer zweiten Öffnung (107, 107a, 107b), die in dem Reparaturabschnitt (103) mündet und die konfiguriert ist für eine vorbestimmte Dauer nach der Einleitung des Reparaturmittels mit einem zumindest teilweise alternierenden Druckverlauf beaufschlagt zu werden, wobei mittels der zweiten Öffnung (107, 107a, 107b) zwischen der Schadstelle (201) und dem Reparaturabschnitt (103) der zumindest teilweise alternierende Druckverlauf beaufschlagbar ist;

wobei der Bearbeitungskopf (101) derart konfiguriert ist, dass in die zweite Passage (106) ein Reparaturmittel einleitbar ist, zur Aufbringung des Reparaturmittels auf die Schadstelle (201) und zum Ermöglichen einer Befüllung der Schadstelle (201) mit dem Reparaturmittel,
wobei der alternierende Druckverlauf eine sich wiederholende Abfolge eines Unterdrucks -p, eines Normaldrucks N und eines Überdrucks +p enthält, und wobei
die Vorrichtung eine Steuereinheit umfasst, die konfiguriert ist, in Reaktion auf eine Aktivierung der Steuereinheit die erste Passage (104) durchgehend mit dem Unterdruck -p zu beaufschlagen, wodurch der Bearbeitungskopf (101) über den gesamten Zeitraum der Reparatur an der Glasscheibe (200) fixiert wird und mit dem Beginn der vorbestimmten Dauer bis zum Ende der vorbestimmten Dauer die zweite Passage (106) mit dem alternierenden Druckverlauf Unterdruck -p, Normaldruck N und Überdruck +p automatisch zu beaufschlagen.

2. Vorrichtung nach Anspruch 1, wobei der Unterdruck -p von einem kontinuierlich laufenden ersten Pumpelement (300) erzeugt wird und der Überdruck +p von einem diskontinuierlich laufenden zweiten Pumpelement (400) erzeugt wird.

3. Vorrichtung nach zumindest einem der Ansprüche 1 bis 2, wobei das zweite Pumpelement (400) zum Erzeugen des Überdruck +p im Wesentlichen gleichzeitig mit dem Herstellen einer Verbindung der zweiten Öffnung (107, 107a, 107b) mit dem zweiten Pumpelement (400) hochgefahren wird (Zeitpunkt $t_3$, $t_6$,...) und nach Beendigung einer vorbestimmten Überdruckphase (Zeitpunkte $t_3$ bis $t_4$, $t_6$ bis $t_7$) wieder abgeschaltet und von der zweiten Öffnung (107, 107a, 107b) getrennt wird.

4. Vorrichtung nach zumindest einem der Ansprüche 1 bis 3, wobei nach Beendigung der vorbestimmten Überdruckphase (Zeitpunkt $t_4$, $t_7$, ...) von der Überdruckphase direkt zur Unterdruckphase geschaltet wird, wobei die zweite Öffnung (107, 107a, 107b) zu diesem Zeitpunkt $t_4$, $t_7$, ... mit dem kontinuierlich laufenden ersten Pumpelement (300) verbunden wird.

5. Vorrichtung nach zumindest einem der Ansprüche 1 bis 4, wobei das Hochfahren des Drucks durch das zweite Pumpelement (400) sanft und gleichmäßig erfolgt und dann, nahe zum Erreichen eines Ziel-Überdrucks ($p_1$, $p_2$, $p_n$) hin, mit einer sinkenden, auslaufenden Steigung erfolgt.

6. Vorrichtung nach zumindest einem der voranstehenden Ansprüche, **gekennzeichnet dadurch,**

   **dass** der Fixierabschnitt (102) ein erstes Dichtelement (103 A) aufweist und mittels des ersten Dichtelements (103 A) von dem Reparaturabschnitt (103) separiert wird, wobei das erste Dichtelement (103 A) ferner eingerichtet ist, um sich beim Anordnen an der Glasscheibe (200) einer Krümmung der Glasscheibe (200) anzupassen, und
   **dass** der Fixierabschnitt (102) ein zweites Dichtelement (103 B) aufweist und mittels des zweiten Dichtelements (103 B) von einem Außenbereich separiert wird, wobei das zweite Dichtelement (103 B) ferner eingerichtet ist, um sich beim Anordnen an der Glasscheibe (200) einer Krümmung der Glasscheibe (200) anzupassen.

7. Vorrichtung nach zumindest einem der voranstehenden Ansprüche, **gekennzeichnet dadurch, dass** der Bearbeitungskopf (101) ein Drehelement (108) mit einer Kammer aufweist, das gegenüber dem Bearbeitungskopf (101) drehbar angeordnet ist und das flüssige Reparaturmittel umfasst, wobei eine Einleitung des flüssigen Reparaturmittels in den Reparaturabschnitt (103) mittels einer Drehbewegung des Drehelements (108) relativ zu dem Bearbeitungskopf (101) durchführbar ist.

8. Vorrichtung nach zumindest einem der voranstehenden Ansprüche, **gekennzeichnet dadurch, dass** das flüssige Reparaturmittel zumindest eines aus einem Acrylharz, einem Polyesterharz, einem Epoxidharz oder einem UV-härtenden Einkomponentenklebstoff umfasst.

9. Vorrichtung nach zumindest einem der voranstehenden Ansprüche, **gekennzeichnet dadurch, dass** der Unterdruck -p einen Wert zwischen -0.5 und $-0.95 * 10^5$ Pa, bevorzugt einen Wert von -0,70 bis $-0,85 * 10^5$ Pa aufweist.

10. Vorrichtung nach zumindest einem der voranstehenden Ansprüche, **gekennzeichnet dadurch, dass** der Überdruck einen Wert zwischen 3.2 und $4.2 * 10^5$Pa, bevorzugt zwischen 3,5 und $4,0 * 10^5$ Pa aufweist.

11. Verfahren zum automatisierten Reparieren einer Schadstelle (201) einer Glasscheibe (200), umfassend:

    Anordnen eines Bearbeitungskopfes (101) über der Schadstelle (201) der Glasscheibe (200);
    Erfassen einer Eingabe bezüglich eines Beginns eines Reparaturprozesses durch eine Steuereinheit und Ausführen der folgenden Schritte:

    Beaufschlagen eines Unterdrucks -p zwischen der Glasscheibe (200) und einem Fixierabschnitt (102) des Bearbeitungskopfes (101), wodurch der Bearbeitungskopf (101) über den gesamten Zeitraum der Reparatur an der Glasscheibe (200) fixiert wird;
    Beaufschlagen eines Unterdrucks -p zwischen der Glasscheibe (200) und einem Reparaturabschnitt (103) des Bearbeitungskopfs (101) und damit auf die Schadstelle (201) und Einleiten eines flüssigen Reparaturmittels in eine zweite Passage (106) und Verbringen des flüssigen Reparaturmittels auf die Schadstelle (201) der Glasscheibe (200) während der Unterdruck -p anliegt;
    Beaufschlagen eines zumindest teilweise alternierenden Druckverlaufs zwischen der Schadstelle (201) und einem Reparaturabschnitt (103) des Bearbeitungskopfes (101) für eine vorbestimmte Dauer, mit den folgenden Schritten:

(A) Beaufschlagen eines Normaldrucks N zwischen der Glasscheibe (200) und einem Reparaturabschnitt (103) des Bearbeitungskopfs (101) und damit auf die Schadstelle (201),
(B) Beaufschlagen eines Überdrucks +p zwischen der Glasscheibe (200) und dem Reparaturabschnitt (103) des Bearbeitungskopfes (101) und damit auf die Schadstelle (201);
(C) Beaufschlagen eines Unterdrucks -p zwischen der Glasscheibe (200) und dem Reparaturabschnitt (103) des Bearbeitungskopfes (101) und damit auf die Schadstelle (201)
(D) Beaufschlagen eines Normaldrucks N zwischen der Glasscheibe (200) und einem Reparaturabschnitt (103) des Bearbeitungskopfs (101) und damit auf die Schadstelle (201),
(E) Wiederholen der Schritte (B) bis (D) für eine vorbestimmte Zeitdauer.

12. Verfahren nach Anspruch 11, ferner umfassend die Schritte:
Entfernen des Bearbeitungskopfes (101) von der Glasscheibe (200) nach Ablauf der vorbestimmten Dauer und Bestrahlen der Schadstelle (201) mit Licht aus einer Lichtquelle, wodurch ein Aushärten des flüssigen Reparaturmittels verursacht und/oder beschleunigt wird.

**Claims**

1. A device for automatically repairing a damaged spot (201) of a glass pane (200), the device comprising:
a processing head (101), which is configured to be arranged on the glass pane (200), including:

a fixing section (102) configured to fix the processing head (101) to the glass pane (200),
a repair section (103) configured to fill the damaged spot (201) with a repair means,
a first passage (104) having a first opening (105) which leads into the fixing section (102) and which is configured to be applied with a negative pressure, wherein by means of the first opening (105), the negative pressure is applied between the glass pane (200) and the fixing section (102),
a second passage (106) having a second opening (107, 107a, 107b) which leads into the repair section (103) and which is configured to be applied with an at least partially alternating pressure profile for a predetermined duration, wherein by means of the second opening (107, 107a, 107b) the at least partially alternating pressure profile is applied between the damaged spot (201) and the repair section (103), wherein
the processing head (101) is configured such that a repair means is introduced into the second passage (106), for applying the repair means to the damaged spot (201) and for enabling the damaged spot (201) to be filled with the repair means, wherein
the alternating pressure profile contains a repeating sequence of a negative pressure -p, a normal pressure N, and an overpressure +p, wherein
the device comprises a control unit which, in response to activation of the control unit, is configured to continuously apply the negative pressure -p to the first passage (104), whereby the processing head (101) is fixed to the glass pane (200) during the entire period of repair, and to automatically apply the alternating pressure curve, the negative pressure -p, the normal pressure N, and the overpressure +p to the second passage (106) from the start of the predetermined duration until the end of the predetermined duration.

2. The device of claim 1, wherein
the negative pressure -p is generated by a continuously running first pump element (300) and the overpressure +p is generated by a discontinuously running second pump element (400).

3. The device according to at least one of claims 1 to 2, wherein
the second pump element (400) for generating the overpressure +p is started up substantially simultaneously with the establishment of a connection of the second opening (107, 107a, 107b) with the second pump element (400) (time t3, t6, ...) and is switched off again after completion of a predetermined overpressure phase (times $t_3$ to $t_4$, $t_6$ to $t_7$) and separated from the second opening (107, 107a, 107b).

4. The device according to at least claims 1 to 3, wherein
after completion of the predetermined overpressure phase the overpressure phase is switched directly to a negative pressure phase, wherein the second opening (107, 107a, 107b) at this time $t_4$, $t_7$, ... is connected to the continuously running first pump element (300).

5. The device according to at least claims 1 to 4, wherein
the pressure is increased by the second pump element (400) gently and uniformly and then, close to reaching a target overpressure with a decreasing, ascending gradient.

6. The device according to at least one of the preceding claims, **characterized in that**:

the fixing section (102) comprises a first sealing element (103 A) and is separated from the repair section (103) by means of the first sealing element (103 A), wherein the first sealing element (103 A) is further configured to adapt to a curve of the glass pane (200) when arranged on the glass pane (200), and
**in that** the fixing section (102) has a second sealing element (103 B) and is separated from an outer region by means of the second sealing element (103 B), wherein
the second sealing element (103 B) is further configured to adapt to a curve of the glass pane (200) when arranged on the glass pane (200).

7. The device according to at least one of the preceding claims, **characterized in that**:
the processing head (101) comprises a rotary element (108) having a chamber which is rotatably arranged opposite the processing head (101) and which comprises liquid repair means, wherein an introduction of the liquid repair means into the repair section (103) is carried out by means of a rotational movement of the rotary element (108) relative to the processing head (101).

8. The device according to at least one of the preceding claims, **characterized in that**:
the liquid repair means comprises at least one of an acrylic resin, a polyester resin, an epoxy resin or a UV-curing one-component adhesive.

9. The device according to at least one of the preceding claims, **characterized in that**:
the negative pressure -p has a value between -0.5 and -0.95 $\times$ $10^5$ Pa, preferably between -0.70 and -0.85 $\times$ $10^5$ Pa.

10. The device according to at least one of the preceding claims, **characterized in that**:
the overpressure has a value between 3.2 and 4.2$\times 10^5$ Pa, preferably between 3.5 and 4.0 $\times$ $10^5$ Pa.

11. A method for automatically repairing a damaged spot (201) of a glass pane (200), the method comprising:

arranging a processing head (101) above the damaged spot (201) of the glass pane (200), recording an input by a control unit and performing the following steps:

applying a negative pressure -p between the glass pane (200) and a fixing section (102) of the processing head (101), whereby the processing head (101) is fixed to the glass pane (200),
applying a negative pressure -p between the glass pane (200) and a repair section (103) of the processing head (101) and thus to the damaged area (201) and introducing a liquid repair means into the second passage (106) and bringing the liquid repair means onto the damaged spot (201) of the glass pane (200) while the negative pressure -p is applied,
applying an at least partially alternating pressure profile between the damaged spot (201) and a repair section (103) of the processing head (101) for a predetermined duration, comprising the following steps:

(A) applying a normal pressure N between the glass pane (200) and a repair section (103) of the processing head (101) and thus to the damaged spot (201),
(B) applying an overpressure +p between the glass pane (200) and the repair section (103) of the processing head (101) and thus to the damaged spot (201),
(C) applying a negative pressure -p between the glass pane (200) and the repair section (103) of the processing head (101) and thus to the damaged spot (201),
(D) applying a normal pressure N between the glass pane (200) and a repair section (103) of the processing head (101) and thus to the damaged spot (201),
(E) repeating steps (B) to (D) for a predetermined period of time.

12. The method of claim 11, further comprising:

removing the processing head (101) from the glass pane (200) after the predetermined duration has elapsed, and
irradiating the damaged spot (201) with light from a light source, thereby causing and/or accelerating curing of the liquid repair means.

**Revendications**

1. Dispositif pour réparer automatiquement une zone endommagée (201) d'une feuille de verre (200), comprenant

une tête de traitement (101) configurée pour être placée sur la feuille de verre (200), présentant

une section de fixation (102) configurée pour fixer la tête de traitement (101) sur la feuille de verre (200) ;

une section de réparation (103) configurée pour remplir la zone endommagée (201) avec un agent de réparation ;

un premier passage (104) avec une première ouverture (105) qui débouche dans la section de fixation (102) et qui est configurée pour être soumise à une dépression, la première ouverture (105) permettant d'appliquer la dépression entre la feuille de verre (200) et la section de fixation (102) ;

un deuxième passage (106) avec une deuxième ouverture (107, 107a, 107b) qui débouche dans la section de réparation (103) et qui est configurée pour être soumise à une variation de pression au moins partiellement alternante, pendant une durée prédéterminée après l'introduction de l'agent de réparation, la deuxième ouverture (107, 107a, 107b) permettant d'appliquer la variation de pression au moins partiellement alternante entre la zone endommagée (201) et la section de réparation (103) ;

la tête de traitement (101) étant configurée de manière à permettre d'introduire un agent de réparation dans le deuxième passage (106), d'appliquer l'agent de réparation sur la zone endommagée (201) et de remplir la zone endommagée (201) avec l'agent de réparation,

la variation de pression alternée comprenant une succession répétitive d'une dépression -p, d'une pression normale N et d'une surpression +p, et

le dispositif comprenant une unité de commande configurée pour, en réponse à une activation de l'unité de commande, soumettre en continu le premier passage (104) à la dépression -p, moyennant quoi la tête de traitement (101) est fixée sur la feuille de verre (200) pendant toute la période de la réparation, et pour soumettre le deuxième passage (106) automatiquement à la variation de pression alternée entre dépression -p, pression normale N et surpression +p, dès le début de la durée prédéterminée jusqu'à la fin de la durée prédéterminée.

2. Dispositif selon la revendication 1, dans lequel la dépression -p est générée par un premier élément de pompage (300) à fonctionnement continu, et la surpression +p est générée par un deuxième élément de pompage (300) à fonctionnement discontinu.

3. Dispositif selon l'une au moins des revendications 1 à 2, dans lequel le deuxième élément de pompage (400) destiné à générer la surpression +p est démarré sensiblement en même temps que l'établissement d'une communication de la deuxième ouverture (107, 107a, 107b) avec le deuxième élément de pompage (400) (instant $t_3$, $t_6$, ...), et est arrêté et déconnecté de la deuxième ouverture (107, 107a, 107b) à la fin d'une phase de surpression prédéterminée (instants $t_3$ à $t_4$, $t_6$ à $t_7$).

4. Dispositif selon l'une au moins des revendications 1 à 3, dans lequel, à la fin de la phase de surpression prédéterminée (instants $t_4$, $t_7$, ...), on passe directement de la phase de surpression à la phase de dépression, la deuxième ouverture (107, 107a, 107b) étant connectée à cet instant $t_4$, $t_7$, ... au premier élément de pompage (300) à fonctionnement continu.

5. Dispositif selon l'une au moins des revendications 1 à 4, dans lequel la montée en pression par le deuxième élément de pompage (400) se fait de manière douce et régulière, puis, à proximité de l'obtention d'une surpression cible ($p_1$, $p_2$, $p_n$), se fait avec une pente décroissante, se terminant à plat.

6. Dispositif selon l'une au moins des revendications précédentes,

**caractérisé en ce que** la section de fixation (102) comprend un premier élément d'étanchéité (103 A) et est séparée de la section de réparation au moyen du premier élément d'étanchéité (103 A), le premier élément d'étanchéité (103 A) étant en outre conçu pour s'adapter à une courbure de la feuille de verre (200) lorsqu'il est placé sur la feuille de verre (200), et **en ce que** la section de fixation (102) comprend un deuxième élément d'étanchéité (103 B) et est séparée d'une zone extérieure au moyen du deuxième élément d'étanchéité (103 B), le deuxième élément d'étanchéité (103 B) étant en outre conçu pour s'adapter à une courbure de la feuille de verre (200) lorsqu'il est placé sur la feuille de verre (200).

7. Dispositif selon l'une au moins des revendications précédentes, **caractérisé en ce que** la tête de traitement (101) comprend un élément rotatif (108) ayant une chambre, qui est disposé de manière rotative par rapport à la tête de traitement (101) et qui comprend l'agent de réparation liquide, une introduction de l'agent de réparation liquide dans la section de réparation (103) pouvant être effectuée au moyen d'un mouvement de rotation de l'élément rotatif (108) par rapport à la tête de traitement (101).

8. Dispositif selon l'une au moins des revendications précédentes, **caractérisé en ce que** l'agent de réparation liquide comprend au moins un agent parmi une résine acrylique, une résine polyester, une résine époxy ou un adhésif à un composant durcissant aux UV.

9. Dispositif selon l'une au moins des revendications précédentes, **caractérisé en ce que** la dépression -p présente une valeur comprise entre -0.5 et -0.95*$10^5$ Pa, de préférence une valeur de -0.70 à -0.85*$10^5$ Pa.

10. Dispositif selon l'une au moins des revendications précédentes, **caractérisé en ce que** la surpression présente une valeur comprise entre 3.2 et 4.2*$10^5$ Pa, de préférence entre 3,5 et 4,0*$10^5$ Pa.

11. Procédé pour réparer automatiquement une zone endommagée (201) d'une feuille de verre (200), consistant à :

placer une tête de traitement (101) au-dessus de la zone endommagée (201) de la feuille de verre (200) ;
saisir une entrée, relative à un début d'un processus de réparation, par une unité de commande, et mettre en oeuvre les étapes suivantes consistant à :

appliquer une dépression -p entre la feuille de verre (200) et une section de fixation (102) de la tête de traitement (101), moyennant quoi la tête de traitement (101) est fixée à la feuille de verre (200) pendant toute la période de la réparation ;
appliquer une dépression -p entre la feuille de verre (200) et une section de réparation (103) de la tête de traitement (101) et donc à la zone endommagée (201), et introduire un agent de réparation liquide dans le deuxième passage (106) et répartir l'agent de réparation liquide sur la zone endommagée (201) de la feuille de verre (200) pendant l'application de la dépression -p ;
appliquer une variation de pression au moins partiellement alternée entre la zone endommagée (201) et une section de réparation (103) de la tête de traitement (101) pendant une durée prédéterminée, comprenant les étapes suivantes consistant à :

(A) appliquer une pression normale N entre la feuille de verre (200) et une section de réparation (103) de la tête de traitement (101) et donc à la zone endommagée (201),
(B) appliquer une surpression +p entre la feuille de verre (200) et la section de réparation (103) de la tête de traitement (101) et donc à la zone endommagée (201) ;
(C) appliquer une dépression -p entre la feuille de verre (200) et la section de réparation (103) de la tête de traitement (101) et donc à la zone endommagée (201) ;
(D) appliquer une pression normale N entre la feuille de verre (200) et une section de réparation (103) de la tête de traitement (101) et donc à la zone endommagée (201) ;
(E) répéter les étapes (B) à (D) pendant une durée prédéterminée.

12. Procédé selon la revendication 11, comprenant en outre les étapes consistant à :
retirer la tête de traitement (101) de la feuille de verre (200) après l'écoulement de la durée prédéterminée, et irradier la zone endommagée (201) avec de la lumière provenant d'une source lumineuse, provoquant et/ou accélérant ainsi le durcissement de l'agent de réparation liquide.

Fig. 1

Fig. 2

Fig. 3

Fig. 4

Fig. 5

Fig. 6

Fig. 7A

Fig. 7B

EP 3 548 263 B1

EP 3 548 263 B1

Fig. 8

Fig. 9

**IN DER BESCHREIBUNG AUFGEFÜHRTE DOKUMENTE**

**In der Beschreibung aufgeführte Patentdokumente**

- DE 60008282 T
- US 4032272 A
- US 2015239185 A